# EUROPEAN PATENT APPLICATION

(11) **EP 4 507 361 A1**
(43) Date of publication of application: **12.02.2025**
(21) Application number: 22936152.2
(22) Date of filing: 07.04.2022
(51) Int. Cl.: H04W 24/02, H04W 16/28, H04L 5/00

(54) **CONFIGURATION METHOD AND DEVICE FOR BEAM FAILURE DETECTION REFERENCE SIGNAL**

(71) Applicant: FUJITSU LIMITED, Kawasaki-shi, Kanagawa 211-8588 (JP)
(72) Inventor: JIA, Meiyi, Beijing 100022 (CN); ZHANG, Jian, Beijing 100022 (CN); LU, Yang, Beijing 100022 (CN)
(74) Representative: Haseltine Lake Kempner LLP
(86) International application number: PCT/CN2022/085661
(87) International publication number: WO 2023/193209

(57) **Abstract**

Embodiments of the present disclosure provide a method and an apparatus for configuring a beam failure detection reference signal, the method for configuring a beam failure detection reference signal including: configuring a first reference signal for beam failure detection by using RRC signaling, and configuring or updating the first reference signal by using MAC CE signaling.

## Description

### TECHNICAL FIELD

The embodiments of the present disclosure relate to the technical field of communications.

### BACKGROUND

Rel-15 NR (new radio release 15) possesses some MIMO (Multiple Input Multiple Output) characteristics, to facilitate the use of a large number of antenna units with frequency bands below 6 GHZ and above 6GHz at a base station side. Rel-16 NR (new radio version 16) enhances Rel-15 NR through the following mechanisms, including:
introducing an enhanced Type II codebook based on DFT (Discrete Fourier Transform) compression;
supporting multi-TRP (Transmission Reception Point) transmission, especially for an eMBB (Enhanced Mobile Broadband) and a PDSCH (Physical Downlink Shared Channel);
enhancement of a multi-beam operation, including reduction of latency and/or multiple reconfiguration overhead, such as reduction of measurement reconfiguration overhead related to QCL (quasi-co-addressed);
SCell (secondary cell) beam failure recovery (BFR);
L1-SINR (layer 1 Signal to Interference plus Noise Ratio);
a low PAPR (Peak to Average Power Ratio) reference signal;
ensuring characteristics of uplink full power transmission.

Currently, NR (New Radio) is in the commercialization process, and various aspects that need to be further enhanced may be determined from actual deployment scenarios, such aspects include:
Rel-16 (version 16) tries to reduce overhead and/or latency, and a high-speed vehicle-mounted scenario (such as a UE driving at a high speed on highways) on FR2 (frequency range 2) requires reduction of latency and overhead more aggressively, not only for intra-cell, but also for inter-cell L1/L2 (Layer 1/ Layer 2) mobility. In addition, it further includes reduction of the occurrence of a beam failure event;
Rel-16 studied enhancements to ensure panel-specific UL (uplink, short for UL) beam selection, but did not have enough time to complete this work. This provides some possibilities for increasing uplink coverage, including mitigating a UL coverage loss due to meeting the MPE (maximum permissible exposure) rule;
Channels other than a PDSCH may benefit from multi-TRP transmission (and multi-panel reception), which also includes inter-cell multi-TRP operations. This includes some new multi-TRP instances, such as UL intensive deployment within a macro cell and/or a heterogeneous network type deployment scenario;
Due to the use of a multi-scenario SRS (Sounding Reference Signal), the SRS may and should be further enhanced, at least for capacity and coverage;
Although Rel-16 supports enhanced Type II CSI (Type 2 Channel State Information), some room for further enhancement can be felt. This includes CSI (Channel State Information) designed for multi-TRP/panel of NC-JT use case and the utilization of partial reciprocity on channel statistics, such as angle(s) and delay(s), mainly targeting FR1 FDD (Frequency Range 1 Frequency Division Duplex) deployment.

In addition, Rel-17 (version 17) supports enhancements for multi-TRP deployment, the targets are FR1 and FR2, including:
using multi-TRP and/or multi-panel, with Rel-16 reliability as a baseline, determining and defining characteristics for improving the reliability and robustness of channels (i.e., a physical downlink control channel (PDCCH), a physical uplink shared channel (PUSCH) and a physical uplink control channel (PUCCH)) other than a PDSCH;
determining and defining enhancements related to QCL/TCI (Transmission Configuration Indication) to ensure inter-cell multi-TRP operations, and assuming multi-PDSCH reception based on multi-DCI (Downlink Control Information, DCI for short) and based on Rel-15/16 TCI architectures;
evaluating and defining simultaneous transmission of multi-TRP with multi-panel reception, and enhancing the content related to beam management if necessary;
enhancing the following contents to support a HST-SFN (High Speed Transmission- Single Frequency Network) deployment scenario: determining and defining a solution of QCL assumption of a DMRS (Demodulation Reference Signal), such as multiple QCL assumptions of the same DMRS port(s), the target is DL-only transmission; if it is verified that it is better than a benefit of baseline enhancement over Rel-16 HST (Version 16 High Speed Transport), evaluating and defining a QCL/QCL-like relationship (including applicable types and related requirements) between DL and UL signals by reusing a unified TCI architecture.

As can be seen from the above, in order to improve reliability and robustness of a channel, Rel-17 supports TRP-specific beam failure detection and recovery for scenarios where multi-TRPS is deployed.

It should be noted that the above introduction to the technical background is just to facilitate a clear and complete description of the technical solutions of the present disclosure, and is elaborated to facilitate the understanding of persons skilled in the art. It cannot be considered that the above technical solutions are known by persons skilled in the art just because these solutions are elaborated in the Background of the present disclosure.

### SUMMARY OF INVENTION

The inventor finds that currently, a TRP-specific beam failure detection reference signal is configured using L3 (Layer 3) signaling, that is an RRC (Radio Resource Control) message. However, after a network uses L2 signaling such as a MAC CE (Media Access Control Control Element) or L1 signaling such as DCI to activate a new TCI state, in order to update the TRP-specific beam failure detection reference signal, the network needs to transmit a new RRC message, which causes a delay in beam failure detection and may cause a beam failure recovery procedure to be triggered incorrectly.

For example, at the moment t0, the network activates a new TCI state using L2 signaling or L1 signaling, but a terminal still listens for a reference signal originally used for beam failure detection until a new signal configuration is received at t1, during which a maximum value of configured beam failure instances may be reached, thereby triggering the beam failure recovery procedure. In case of a special cell, a random access procedure may be triggered, resulting in service interruption.

For the above problems, the embodiments of the present disclosure provide a method and apparatus for configuring a beam failure detection reference signal, to support configuring/updating the reference signal for beam failure detection using RRC signaling and the MAC CE.

According to an aspect of the embodiments of the present disclosure, an apparatus for configuring a beam failure detection reference signal is provided, including:
a first configuring unit configured to configure a first reference signal for beam failure detection by using RRC signaling; and
a second configuring unit configured to configure or update the first reference signal by using MAC CE signaling.

According to another aspect of the embodiments of the present disclosure, an apparatus for configuring a beam failure detection reference signal is provided, including:
a first configuring unit configured to configure reference signal(s) for TRP-specific beam failure detection by using RRC signaling; and
a second configuring unit configured to configure reference signal(s) for failure detection by using the RRC signaling.

One of advantageous effects of the embodiments of the present disclosure lies in: according to the embodiments of the present disclosure, configuring/updating a reference signal for beam failure detection using RRC signaling and a MAC CE can be supported. Compared with existing mechanisms, after a TCI state of a PDCCH reception is changed, on the one hand, the present disclosure may use a corresponding reference signal to perform beam failure detection faster, so as to avoid wrong triggering a beam failure recovery procedure and the service interruption caused by it; on the other hand, through the present disclosure, a reference signal for beam failure detection may be configured/updated more flexibly, thus reducing signaling overhead and saving air interface resources.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended claims, the implementations of the present disclosure include many changes, modifications and equivalents.

Features that are described and/or shown with respect to one implementation can be used in the same way or in a similar way in one or more other implementations, can be combined with or replace features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.
FIG. 1a to FIG. 1c are schematic diagrams of detection of beam failure or of triggering of beam failure recovery of a serving cell;
FIG. 2 is a schematic diagram of a scenario of a multi-TRP operation;
FIG. 3 is a schematic diagram of beam failure detection (BFD)/beam failure recovery (BFR) of a TRP;
FIG. 4 is a schematic diagram of a method for configuring a beam failure detection reference signal in the embodiments of the present disclosure;
FIG. 5 and FIG. 6 are schematic diagrams of two examples of Format 1 of a first MAC CE;
FIG. 7 and FIG. 8 are schematic diagrams of two examples of Format 2 of a first MAC CE;
FIG. 9 is another schematic diagram of a method for configuring a beam failure detection reference signal in the embodiments of the present disclosure;
FIG. 10 is a schematic diagram of an apparatus for configuring a beam failure detection reference signal in the embodiments of the present disclosure;
FIG. 11 is another schematic diagram of an apparatus for configuring a beam failure detection reference signal in the embodiments of the present disclosure;
FIG. 12 is a schematic diagram of a terminal equipment in the embodiments of the present disclosure;
FIG. 13 is a schematic diagram of composition of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), Integrated Access and Backhaul (IAB) node or IAB-DU or IAB-donor. And the term "base station" may include their some or all functions, each base station may provide communication coverage to a specific geographic region. The term "a cell" may refer to a base station and/or its coverage area, which depends on the context in which this term is used. Where there is no confusion, the terms "cell" and "base station " are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT, a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipment as described above. If it is not specifically mentioned herein, "a device" may refer to a network device, or may refer to a terminal equipment.

In the following description, without causing confusion, "failure" may be replaced with "that needs to be recovered", "if..." may be replaced with "in a case where... "or" when...". In addition, in the following description, the lower layer refers to a physical layer, an RF chain, etc.

For the configuration of a beam failure detection reference signal, in current standards, there are the following configurations about beam failure detection.

The following is the content of radio link monitoring configuration (*RadioLinkMonitoringConfig*):

| |
|---|
| - *RadioLinkMonitoringConfig* |
| The IE *RadioLinkMonitoringConfig* is used to configure radio link monitoring for detection of beam- and/or cell radio link failure. See also TS 38.321 [3], clause 5.1.1. |

The following is the content of an information element (IE) of the *RadioLinkMonitoringConfig*:

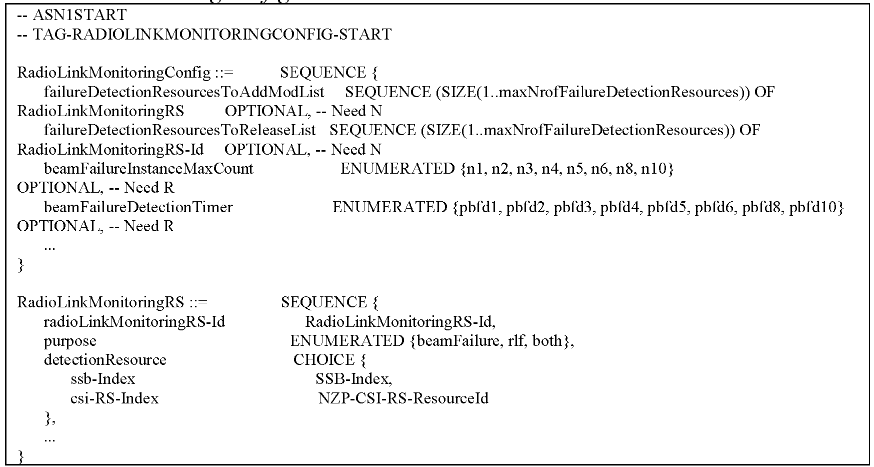

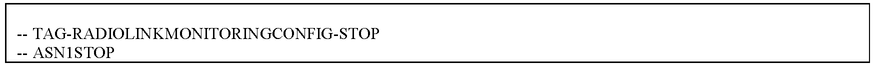

The following is the content of field descriptions of *RadioLinkMonitoringConfig*:

| ***RadioLinkMonitoringConfig* field descriptions** |
|---|
| ***beamFailureDetectionTimer*** |
| Timer for beam failure detection (see TS 38.321 [3], clause 5.17). See also the *BeamFailureRecoveryConfig* IE. Value in number of "Q_{out,LR} reporting periods of Beam Failure Detection" Reference Signal (see TS 38.213 [13], clause 6). Value *pbfd1* corresponds to 1 Q_{out,LR} reporting period of Beam Failure Detection Reference Signal, value *pbfd2* corresponds to 2 Q_{out,LR} reporting periods of Beam Failure Detection Reference Signal and so on. |
| ***beamFailureInstanceMaxCount*** |
| This field determines after how many beam failure events the UE triggers beam failure recovery (see TS 38.321 [3], clause 5.17). Value n1 corresponds to 1 beam failure instance, value n2 corresponds to 2 beam failure instances and so on. |
| ***failureDetectionResourcesToAddModList*** |
| A list of reference signals for detecting beam failure and/or cell level radio link failure (RLF). |
| The limits of the reference signals that the network can configure are specified in TS 38.213 [13], table 5-1. The network configures at most two detectionResources per BWP for the purpose *beamFailure* or *both.* If no RSs are provided for the purpose of beam failure detection, the UE performs beam monitoring based on the activated *TCI-State* for PDCCH as described in TS 38.213 [13], clause 6. If no RSs are provided in this list for the purpose of RLF detection, the UE performs Cell-RLM based on the activated *TCI-State* of PDCCH as described in TS 38.213 [13], clause 5. The network ensures that the UE has a suitable set of reference signals for performing cell-RLM. |

The following is the content of field descriptions of a radio link monitoring reference signal (*RadioLinkMonitoringRS*) in said configuration:

| ***RadioLinkMonitoringRS* field descriptions** |
|---|
| ***detectionResource*** |
| A reference signal that the UE shall use for radio link monitoring or beam failure detection (depending on the indicated *purpose*)*.* Only periodic 1-port CSI-RS can be configured on SCell for beam failure detection purpose. |
| ***purpose*** |
| Determines whether the UE shall monitor the associated reference signal for the purpose of cell- and/or beam failure detection. For SCell, network only configures the value to beamFailure. |

In addition, for the beam failure detection procedure, a plurality of beams and beam management are supported in NR. A MAC (Media Access Control) entity may be configured by RRC with a beam failure recovery procedure for each serving cell, this procedure is used to indicate a new SSB (Synchronization Signal Block) or CSI-RS (Channel Status Information Reference Signal) to a serving gNB when beam failure is detected on serving SSB(s)/CSI-RS(s). Beam failure is detected by calculating the number of beam failure instance indications from a lower layer to the MAC entity.

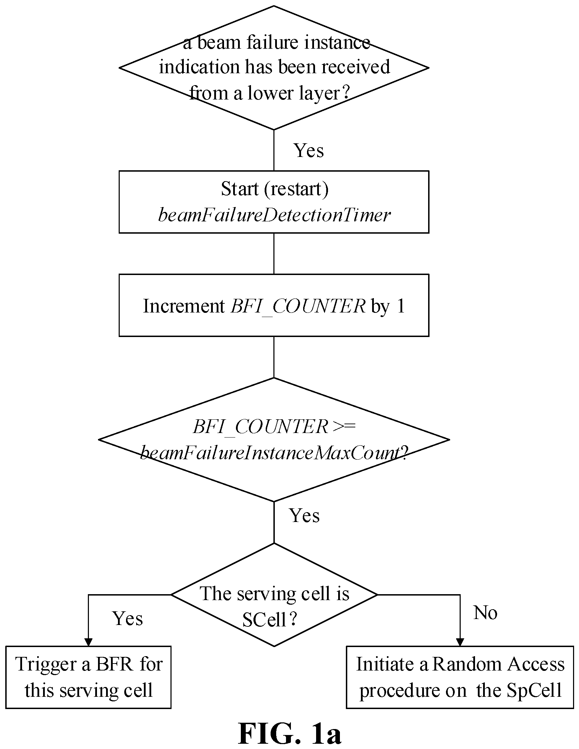

FIG. 1a to FIG. 1c are schematic diagrams of detection of beam failure or of triggering of beam failure recovery of a serving cell.

As shown in FIG. 1a, a Beam Failure Detection (BFD) procedure uses a UE variable *BFI*_*COUNTER*, this variable is a counter for a beam failure instance indication, its initial value is set is be 0, and each serving cell is configured with a counter. For each serving cell configured with beam failure detection, the MAC entity will:
if receiving a beam failure instance indication from a lower layer:
start or restart *beamFailureDetectionTimer*;
add *BFI_COUNTER* by 1;
if *BFI_COUNTER* is greater than or equal to *beamFailureInstanceMaxCount*:
   if the serving cell is a secondary cell (SCell), trigger a BFR of the serving cell;
   otherwise, initiate a random access procedure on the special cell (SpCell).

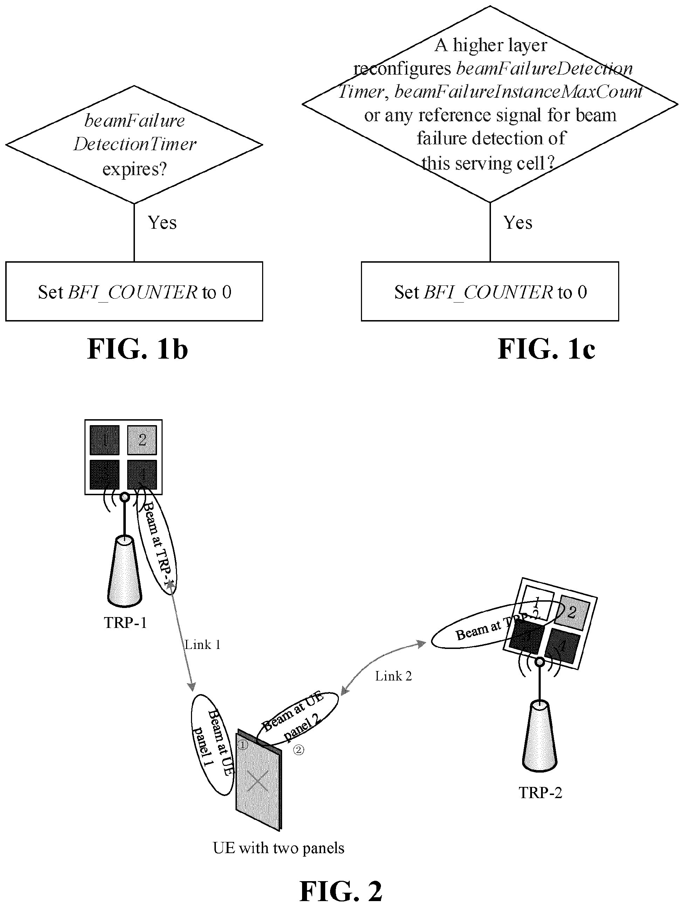

As shown in FIG. 1b and FIG. 1c, the MAC entity will further:
if *beamFailureDetectionTimer* expires; or
if a high layer reconfigures *beamFailureDetectionTimer, beamFailureInstanceMaxCount* or any reference signal for beam failure detection for the serving cell:
   set *BFI*_*COUNTER* to 0.

This procedure is applicable to special cells and secondary cells of Rel-15 and Rel-16.

The inventor finds that in Rel-15 and Rel-16, cell-level beam failure detection is supported; under the R17 multi-TRP operation, beam failure detection for a per-TRP separate BFD-RS (Beam Failure Detection Reference Signal) set is supported, and synchronous configuration of cell-specific BFR and TRP-specific BFR on different CCs (Component Carriers) is supported, but synchronous configuration of TRP-specific BFR and Rel-15/16 BFR (i.e., *BeamFailureRecoveryConfigl BeamFailureRecoverySCellConfig-r16*) on a CC is not supported.

In addition, for triggering of TRP-specific beam failure recovery, the RRC configures some parameters, for example:
- *beamFailureInstanceMaxCount* of beam failure detection of each BFD-RS set of a serving cell configured with two BFD-RS sets;
- *beamFailureDetectionTimer* of beam failure detection of each BFD-RS set of a serving cell configured with two BFD-RS sets.

The following UE variables are used for the beam failure detection procedure:
- *BFI*_*COUNTER* (each BFD-RS set of a serving cell configured with two BFD-RS sets): a counter for a beam failure instance indication, its initial value is set to be 0.

For each serving cell configured with beam failure detection, the MAC entity will:
1> if this serving cell is configured with two BFD-RS sets, for each BFD-RS set of the serving cell, the MAC entity will:
   2> if receiving a beam failure instance indication of a BFD-RS set from a lower layer:
      3> start or restart *beamFailureDetectionTimer*;
      3> add *BFI*_*COUNTER* of this BFD-RS set by 1;
      3> if *BFI*_*COUNTER* is greater than or equal to *beamFailureInstanceMaxCount:*
         4> trigger BFR of this BFD-RS set of this serving cell;
   2> if two BFD-RS sets of this special cell both trigger BFR and have not completed successfully:
      3> initiate a random access procedure on this special cell;
   2> if this serving cell is a special cell and a random access procedure initiated for beam failure recovery of two BFD-RS sets of this special cell is completed successfully:
      3> set *BFI*_*COUNTER* of each BFD-RS set of the special cell to 0;
      3> consider that this beam failure recovery procedure is completed successfully.
   2> if *beamFailureDetectionTimer* of this BFD-RS set expires; or
   2> if a high layer reconfigures *beamFailureDetectionTimer, beamFailureInstanceMaxCount* or any reference signal for beam failure detection for this BFD-RS set of this serving cell:
      3> *set BFI*_*COUNTER* of this BFD-RS set to 0.
   2> if receiving a PDCCH addressed by a C-RNTI, which indicates uplink grant for transmission of a new transmission of a HARQ procedure of an Enhanced BFR MAC CE or a Truncated Enhanced BFR MAC CE including beam failure recovery information of this BFD-RS set of this serving cell:
      3> set *BFI*_*COUNTER* of this BFD-RS set to 0;
      3> consider that this beam failure recovery procedure is completed successfully, and cancel all triggered BFRs of this BFD-RS set of this serving cell.
   2> if this serving cell is a secondary cell and the secondary cell is deactivated:
      3> set *BFI*_*COUNTER* of each BFD-RS set of the secondary cell to 0;
      3> consider that this beam failure recovery procedure is completed successfully, and cancel all triggered BFRs of all BFD-RS sets of this serving cell.

In addition, for the configuration of a TRP-specific beam failure detection reference signal, in order to support multi-TRP beam failure detection, the following configuration of the TRP-specific beam failure detection reference signal is tentatively introduced in the current standard.

The following is the content of the radio link monitoring configuration (*RadioLinkMonitoringConfig*):

| |
|---|
| - *RadioLinkMonitoringConfig* |
| The IE *RadioLinkMonitoringConfig* is used to configure radio link monitoring for detection of beam- and/or cell radio link failure. See also TS 38.321 [3], clause 5.1.1. |

The following is the content of an IE of the *RadioLinkMonitoringConfig*:

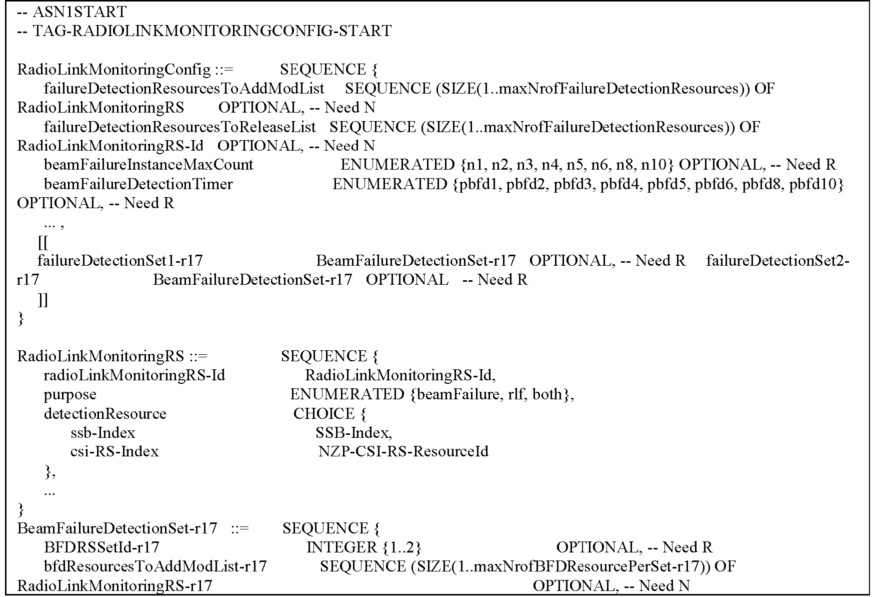

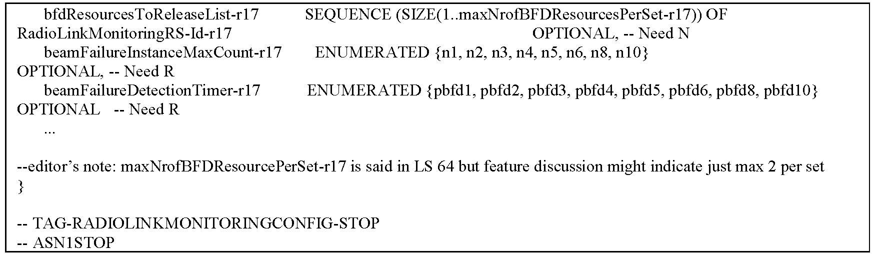

The following is the content of field descriptions of the *RadioLinkMonitoringConfig*:

| ***RadioLinkMonitoringConfig* field descriptions** |
|---|
| ***failureDetectionSet1*, *failureDetectionSet2*** |
| Configures parameters for beamfailure detection towards beam failure detection resources configured in the set. If *additionalPCIList* is configured for the serving cell, each RS in one set can be associted only to one PCI. |
| |
| ***heamFailureDetectionTimer*** |
| Timer for beam failure detection (see TS 38.321 [3], clause 5.17). See also the *BeamFailureRecoveryConfig* IE. Value in number of "Q_{out,LR} reporting periods of Beam Failure Detection" Reference Signal (see TS 38.213 [13], clause 6). Value *pbfd1* corresponds to 1 Q_{out,LR} reporting period of Beam Failure Detection Reference Signal, value *pbfd2* corresponds to 2 Q_{out,LR} reporting periods of Beam Failure Detection Reference Signal and so on. |
| ***beamFailureInstanceMaxCount*** |
| This field determines after how many beam failure events the UE triggers beam failure recovery (see TS 38.321 [3], clause 5.17). Value n1 corresponds to 1 beam failure instance, value n2 corresponds to 2 beam failure instances and so on. |
| ***failureDetectionResourcesToAddModList*** |
| A list of reference signals for detecting beam failure and/or cell level radio link failure (RLF). |
| The limits of the reference signals that the network can configure are specified in TS 38.213 [13], table 5-1. The network configures at most two detectionResources per BWP for the purpose *beamFailure* or *both.* If no RSs are provided for the purpose of beam failure detection, the UE performs beam monitoring based on the activated *TCI-State* for PDCCH as described in TS 38.213 [13], clause 6. If no RSs are provided in this list for the purpose of RLF detection, the UE performs Cell-RLM based on the activated *TCI-State* of PDCCH as described in TS 38.213 [13], clause 5. The network ensures that the UE has a suitable set of reference signals for performing cell-RLM. |

The following is the content of field descriptions of a radio link monitoring reference signal (*RadioLinkMonitoringRS*) in said configuration:

| ***RadioLinkMonitoringRS* field descriptions** |
|---|
| ***detectionResource*** |
| A reference signal that the UE shall use for radio link monitoring or beam failure detection (depending on the indicated *purpose*)*.* Only periodic 1-port CSI-RS can be configured on SCell for beam failure detection purpose. |
| ***purpose*** |
| Determines whether the UE shall monitor the associated reference signal for the purpose of cell- and/or beam failure detection. For SCell, network only configures the value to beamFailure. |

The following is the content of an ID (*RadioLinkMonitoringRS-Id*) of *RadioLinkMonitoringRS* in said configuration:

| |
|---|
| - *RadioLinkMonitoringRS-Id* |
| The IE *RadioLinkMonitoringRS-Id* is used to identify one *RadioLinkMonitoringRS.* |

The following is the content of an IE of the *RadioLinkMonitoringRS-Id*

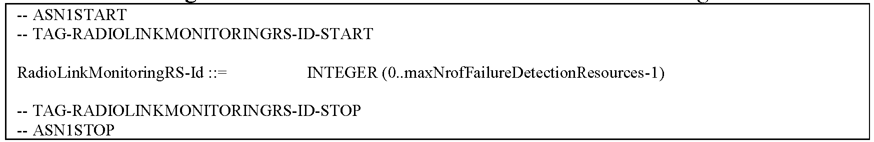

The scenarios of the embodiments of the present disclosure are described via the following examples, however the present disclosure is not limited to these.

FIG. 2 is a schematic diagram of a scenario of a multi-TRP operation, as shown in FIG. 2, TRP is a part of a gNB and is used to receive signals from a terminal UE or transmit signals to the terminal UE. In the multi-TRP (mTRP) operation, a serving cell may schedule a UE from two TRPs, providing better PDSCH coverage, reliability and/or data rate. For the multi-TRP, there are two different operation modes, i.e., single-DCI and multi-DCI. For these two modes, in a configuration provided by an RRC layer, control of uplink and downlink operations is performed by a physical layer and a MAC. In a single-DCI mode, a UE is scheduled by two TRPs via the same DCI; and in a multi-DCI mode, the UE is scheduled by a separate DCI of each TRP.

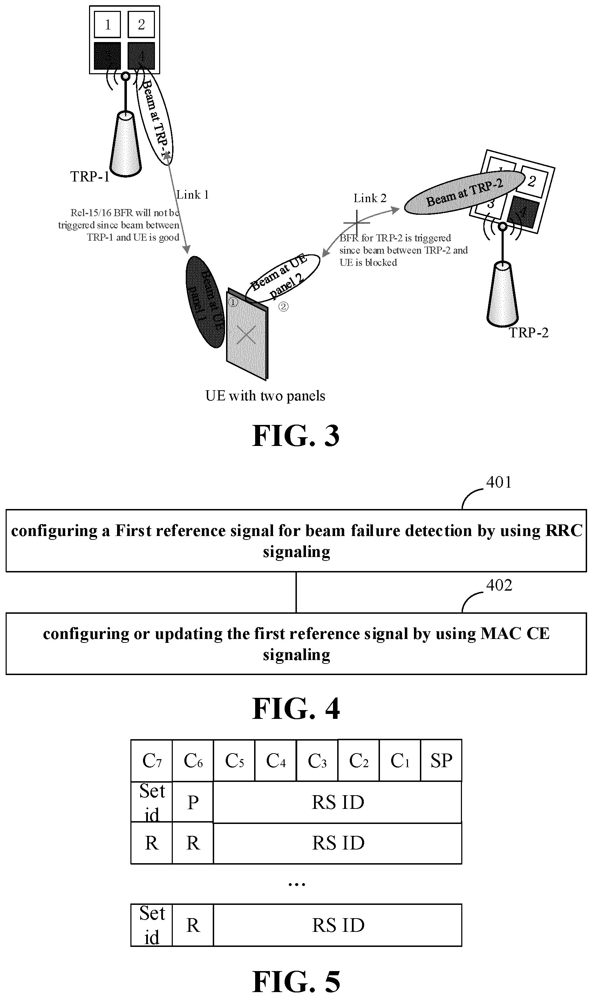

FIG. 3 is a schematic diagram of beam failure detection (BFD)/beam failure recovery (BFR) of each TRP, as shown in FIG. 3, the gNB provide services to a terminal (UE) via TRP-1 and TRP-2. The UE performs beam failure detection per TRP. Link-1 between TRP-1 and the UE works normally, i.e., the UE does not detect beam failure on TRP1, or does not trigger beam failure recovery on TRP1; however, link-2 between TRP-2 and the UE is blocked, i.e., the UE detects beam failure on TRP-2, or triggers beam failure recovery on TRP-2. These two TRPs may belong to the same cell, or may belong to different cells.

The embodiments of the present disclosure are described below in conjunction with the drawings and the specific implementations.

### Embodiments of a first aspect

Embodiments of the present disclosure provide a method for configuring a beam failure detection reference signal, the method is applicable to a network device, and is also applicable to a terminal equipment.

FIG. 4 is a schematic diagram of a method for configuring a beam failure detection reference signal in the embodiments of the present disclosure, as shown in FIG. 4, the method includes:
401, configuring a reference signal for beam failure detection by using RRC signaling (called a first reference signal); and
402, configuring or updating the first reference signal by using MAC CE signaling.

It should be noted that the above FIG. 4 only schematically describes the embodiments of the present disclosure, but the present disclosure is not limited to this. For example, an execution order of operations can be adjusted appropriately, moreover some other operations can be increased or some operations thereof may be reduced. Persons skilled in the art can make appropriate modifications according to the above contents, not limited to the records in the above FIG. 4.

In the above embodiments, by configuring the reference signal for beam failure detection by using RRC signaling and configuring or updating the reference signal by using MAC CE signaling, configuring/updating the reference signal for beam failure detection via the RRC signaling and the MAC CE signaling is realized, which avoids service interruption and improves network performance.

In some embodiments, the first reference signal includes a reference signal for TRP-specific beam failure detection (called a second reference signal). That is, a reference signal for TRP-specific beam failure detection may be configured by using RRC signaling.

In some embodiments, the second reference signal is contained in two beam failure detection reference signal sets which have their respective set IDs (identifiers).

In the above embodiments, configuring a reference signal for beam failure detection (a first reference signal) by using RRC signaling may include at least one of the following configurations:
the RRC signaling includes a first beam failure detection reference signal set and a second beam failure detection reference signal set, i.e., two beam failure detection reference signal sets are explicitly configured via the RRC signaling, when the first beam failure detection reference signal set exists, the second beam failure detection reference signal set compulsorily exists;
the first beam failure detection reference signal set and the second beam failure detection reference signal set respectively include a set ID, the set ID compulsorily existing, and a value of the set ID being 1 or 2;
the first beam failure detection reference signal set and the second beam failure detection reference signal set respectively include a set of second reference signals, the second reference signals including second reference signal IDs and detection resources; wherein the second reference signal may be an added and/or modified second reference signal, the second reference signal IDs may be integers from 0 to n-1, n is the maximum number of failure detection resources of each set of second reference signals, such as 64; the detection resource is for example an SSB index or NZP CSI-RS resource ID, etc.;
the first beam failure detection reference signal set and the second beam failure detection reference signal set respectively include a set of released second reference signal IDs.

In some other embodiments, the second reference signal is contained in one beam failure detection reference signal set which has a set ID.

In the above embodiments, configuring a reference signal for beam failure detection (a first reference signal) by using RRC signaling may include at least one of the following configurations:
the RRC signaling includes a third beam failure detection reference signal set, i.e., one beam failure detection reference signal set is explicitly configured via the RRC signaling, the third beam failure detection reference signal set including a set ID, the set ID compulsorily existing, and a value of the set ID being 1 or 2;
the third beam failure detection reference signal set includes a set of second reference signals, the second reference signals including second reference signal IDs and detection resources; wherein the second reference signal may be an added and/or modified second reference signal, the second reference signal IDs may be integers from 0 to n-1, n is the maximum number of failure detection resources of each set of second reference signals, such as 64; the detection resource is for example an SSB index or NZP CSI-RS resource ID, etc.;
the third beam failure detection reference signal set includes a set of released second reference signal IDs.

In the above embodiments, the set ID of the third beam failure detection reference signal set may be related to a coresetpool (called a first coresetpool), or the third beam failure detection reference signal set corresponds to the first coresetpool. For the multi-DCI mode of the multi-TRP operation, that is, different TRPs are scheduled via different DCIs, different DCIs are associated with coreset (a control resource set) in different coresetpools. For example, DCI of TRP-1 is associated with a coreset in coresetpool 1, DCI of TRP-2 is associated with a coreset in coresetpool 2. That is, an associated coresetpool may be used to identify a TRP.

In the above embodiments, the second reference signals in another beam failure detection reference signal set different from the third beam failure detection reference signal set may be determined via a TCI state received by a lower layer in a PDCCH. The another beam failure detection reference signal set also corresponds to one coresetpool (a control resource set pool).

In some further embodiments, the second reference signal is contained in one beam failure detection reference signal set with no set ID.

In the above embodiments, configuring a reference signal for beam failure detection (a first reference signal) by using RRC signaling may include at least one of the following configurations:
the RRC signaling includes a fourth beam failure detection reference signal set which does not have a set ID;
the fourth beam failure detection reference signal set includes a set of second reference signals, the second reference signals including second reference signal IDs, coresetpool information associated with the second reference signals, and detection resources; wherein the second reference signal IDs may be integers from 0 to 2n-1, n is the maximum number of failure detection resources of each set of second reference signals, such as 64; the detection resource is for example an SSB index or NZP CSI-RS resource ID, etc.;
the fourth beam failure detection reference signal set includes a set of released second reference signal IDs.

In the above embodiments, the associated coresetpool information e.g. is a coresetpool index, based on this field, a terminal equipment is capable of determining a beam failure detection reference signal set where the second reference signals are located, for example the coresetpool index is 1, representing that the second reference signals belong to the second beam failure detection reference signal set; an unassociated or associated coresetpool index is 0, representing that the second reference signals belong to the first beam failure detection reference signal set.

Each of the above embodiments is only illustrative for configuring a first reference signal for beam failure detection by using RRC signaling, but the present disclosure is not limited to this, appropriate modifications can be also made based on the above each embodiment. For example, each of the above embodiments may be used individually, or one or more of the above embodiments may be combined.

In the embodiments of the present disclosure, a reference signal for failure detection (called a third reference signal) may further be configured by using RRC signaling.

In the above embodiments, the RRC signaling may include an indication field (called a first indication field), the first indication field being used to indicate a purpose of the reference signal for failure detection (the third reference signal), so as to indicate a terminal equipment that a purpose for monitoring a relevant reference signal is cell detection or beam failure detection.

In the above embodiments, if the RRC signaling configures the reference signal(s) for TRP-specific beam failure detection (the second reference signal), a value of the first indication field is configured as being of a rlf (radio link failure), for example the value of the first indication field is always configured as being of a rlf, or the value of the first indication field is only configured as being of a rlf.

In the embodiments of the present disclosure, RRC signaling may also be used to configure or indicate or associate information on a TCI state of a PDCCH reception for the first reference signal or the second reference signal.

In the above embodiments, the TCI state of the PDCCH reception may be configured via the RRC signaling.

In the above embodiments, the information on the TCI state may be a TCI state ID, optionally, the information on the TCI state may further include cell information and/or BWP (bandwidth part) information, the cell information e.g. is an index of a serving cell or a PCI (physical cell identification) index, and the BWP information e.g. is a BWP ID.

In the above embodiments, description is made by taking "the first reference signal includes a reference signal for TRP-specific beam failure detection (a second reference signal)" as an example, and in some embodiments, the first reference signal may not include the above-mentioned reference signal for TRP-specific beam failure detection (the second reference signal), and a lower layer may determine the reference signal for TRP-specific beam failure detection (the second reference signal) via a TCI state of a PDCCH reception, and determine a coresetpool associated with the second reference signal, for example, determine that the second reference signal is associated with one coresetpool or two coresetpools.

In the embodiments of the present disclosure, the RRC signaling includes an RRC message, an information element (IE) in the RRC message, and a field in the RRC message, etc., implementations of the RRC signaling of the embodiments of the present disclosure is described below through specific examples.

In the above embodiments, the RRC signaling supports at least one of the following three possibilities:
Possibility 1: a BFD-RS (Beam Failure Detection Reference Signal) is included in two BFD-RS sets, each of which has its respective set ID;
Possibility 2: a BFD-RS is included in one BFD-RS set which has a set ID;
Possibility 3: a BFD-RS is included in one BFD-RS set which does not have a set ID.

In some embodiments, the RRC signaling supports the above three possibilities, i.e., an RRC message may include one or two BFD-RS sets, each set may or may not have respective set ID(s). In the standards, regarding the contents of a radio link monitoring configuration and a radio link monitoring reference signal, the description can be supplemented or improved as follows, in which the underlined contents are those of this embodiment which are distinguished from the existing standards, for example bold underlined parts are not included; for another example, bold underlined contents are included as additionally enhanced parts.

The following is the content of the radio link monitoring configuration (*RadioLinkMonitoringConfig*):

| |
|---|
| - *RadioLinkMonitoringConfig* |
| The IE *RadioLinkMonitoringConfig* is used to configure radio link monitoring for detection of beam- and/or cell radio link failure. See also TS 38.321 [3], clause 5.1.1. |

The following is the content of the IE of *RadioLinkMonitoringConfig*:

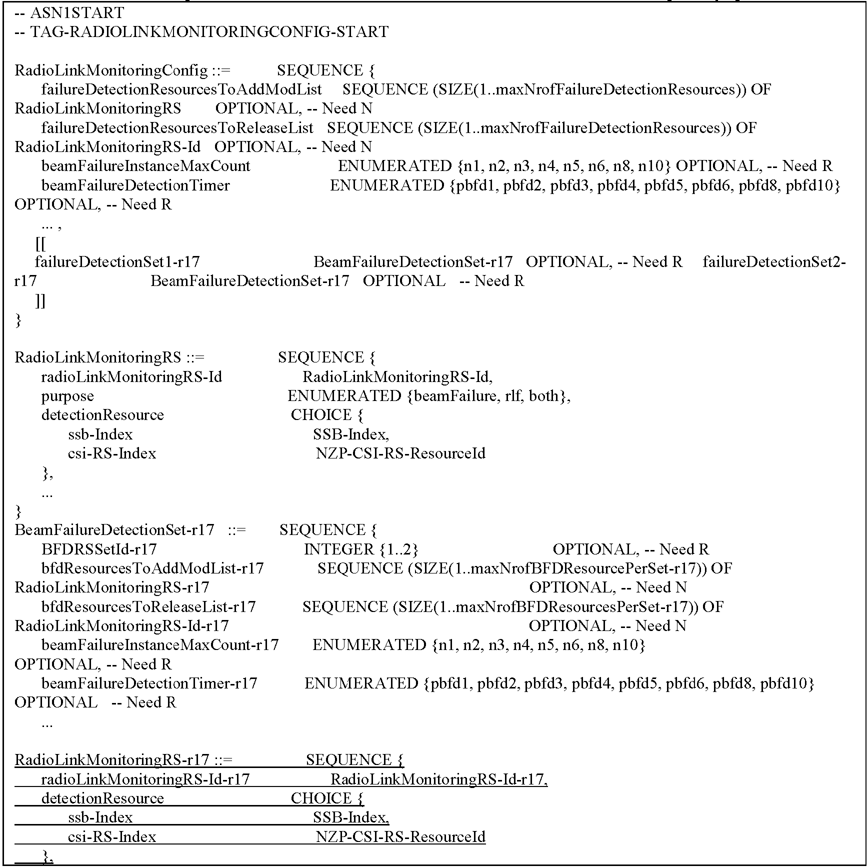

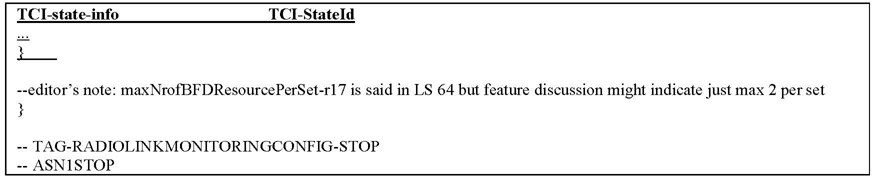

The following is the content of field descriptions of *RadioLinkMonitoringConfig*:

| ***RadioLinkMonitoringConfig* field descriptions** |
|---|
| ***failureDetectionSet1*, *failureDetectionSet2*** |
| Configures parameters for beamfailure detection towards beam failure detection resources configured in the set. |
| If *additionalPCIList* is configured for the serving cell, each RS in one set can be associted only to one PCI. |
| |
| ***beamFailureDetectionTimer*** |
| Timer for beam failure detection (see TS 38.321 [3], clause 5.17). See also the *BeamFailureRecoveryConfig* IE. |
| Value in number of "Q_{out,LR} reporting periods of Beam Failure Detection" Reference Signal (see TS 38.213 [13], clause 6). Value *pbfd1* corresponds to 1 Q_{out,LR} reporting period of Beam Failure Detection Reference Signal, value *pbfd2* corresponds to 2 Q_{out,LR} reporting periods of Beam Failure Detection Reference Signal and so on. |
| ***beamFailureInstanceMaxCount*** |
| This field determines after how many beam failure events the UE triggers beam failure recovery (see TS 38.321 [3], clause 5.17). Value n1 corresponds to 1 beam failure instance, value n2 corresponds to 2 beam failure instances and so on. |
| ***failureDetectionResourcesToAddModList*** |
| A list of reference signals for detecting beam failure and/or cell level radio link failure (RLF). The limits of the reference signals that the network can configure are specified in TS 38.213 [13], table 5-1. The network configures at most two detectionResources per BWP for the purpose *beamFailure* or *both.* If no RSs are provided for the purpose of beam failure detection, the UE performs beam monitoring based on the activated *TCI-State* for PDCCH as described in TS 38.213 [13], clause 6. If no RSs are provided in this list for the purpose of RLF detection, the UE performs Cell-RLM based on the activated *TCI-State* of PDCCH as described in TS 38.213 [13], clause 5. The network ensures that the UE has a suitable set of reference signals for performing cell-RLM. |

The following is the content of field descriptions of a radio link monitoring reference signal (*RadioLinkMonitoringRS*) in said configuration:

| ***RadioLinkMonitoringRS* field descriptions** |
|---|
| ***detectionResource*** |
| A reference signal that the UE shall use for radio link monitoring or beam failure detection (depending on the indicated *purpose*)*.* Only periodic 1-port CSI-RS can be configured on SCell for beam failure detection purpose. |
| ***purpose*** |
| Determines whether the UE shall monitor the associated reference signal for the purpose of cell- and/or beam failure detection. For SCell, network only configures the value to beamFailure. **When failureDetectionSet1-r17 or failureDetectionSet2-r17 is present, network only/always configures the value to rlf.** |

The following is the content of the ID (*RadioLinkMonitoringRS-Id*) of the radio link monitoring reference signal (*RadioLinkMonitoringRS*) in said configuration:

| |
|---|
| - *RadioLinkMonitoringRS-Id* |
| The IE *RadioLinkMonitoringRS-Id* is used to identify one *RadioLinkMonitoringRS.* |

The following is the content of the IE of *RadioLinkMonitoringRS-Id*:

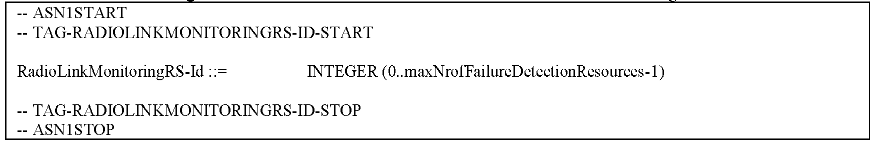

The following is the content of the radio link monitoring reference signal ID (*RadioLinkMonitoringRS-Id-r17*) of the newly added R-17:

| |
|---|
| - *RadioLinkMonitoringRS-Id-r17* |
| The IE *RadioLinkMonitoringRS-Id* is used to identify one *RadioLinkMonitoringRS-r17.* |

The following is the content of the IE of *RadioLinkMonitoringRS-Id-r17*:

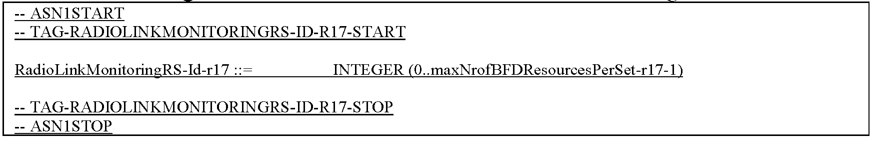

According to the above embodiments, the RRC signaling can support more possibilities of BFD-RS configuration, for example, may include one or two BFD-RS sets, each set may or may not have respective set ID(s), etc. Thereby, the RRC signaling design is flexible and has forward compatibility.

In some other embodiments, the RRC signaling supports the above possibility 1, i.e., the RRC signaling includes two BFD-RS sets, each set has its respective set ID. In the standards, regarding the contents of a radio link monitoring configuration and a radio link monitoring reference signal, the description can be supplemented or improved as follows, in which the underlined contents are those of this embodiment which are distinguished from the existing standards, for example bold underlined parts are not included; for another example, bold underlined contents are included as additionally enhanced parts.

The following is the content of the radio link monitoring configuration (*RadioLinkMonitoringConfig*):

| |
|---|
| - *RadioLinkMonitoringConfig* |
| The IE *RadioLinkMonitoringConfig* is used to configure radio link monitoring for detection of beam- and/or cell radio link failure. See also TS 38.321 [3], clause 5.1.1. |

The following is the content of the IE of *RadioLinkMonitoringConfig*:

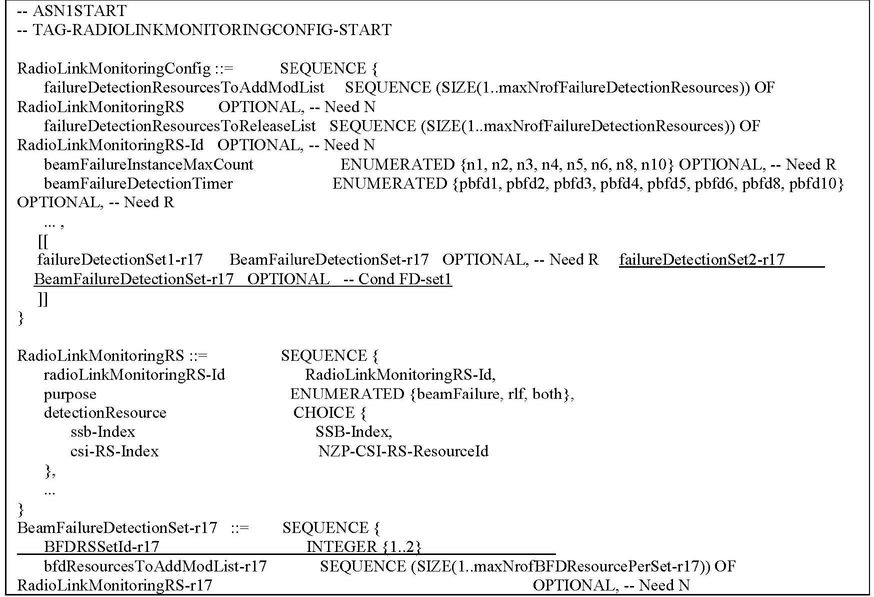

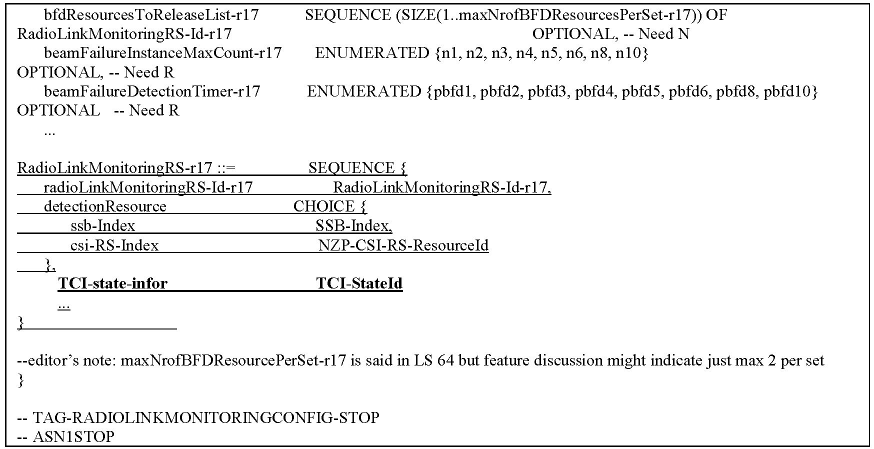

The following is the content of field descriptions of *Radiol inkMonitoringConfig*:

| ***RadioLinkMonitoringConfig* field descriptions** |
|---|
| ***failureDetectionSet1*, *failureDetectionSet2*** |
| Configures parameters for beamfailure detection towards beam failure detection resources configured in the set. If *additionalPCIList* is configured for the serving cell, each RS in one set can be associted only to one PCI. |
| |
| ***beamFailureDetectionTimer*** |
| Timer for beam failure detection (see TS 38.321 [3], clause 5.17). See also the *BeamFailureRecoveryConfig* IE. Value in number of "Q_{out,LR} reporting periods of Beam Failure Detection" Reference Signal (see TS 38.213 [13], clause 6). Value *pbfdl* corresponds to 1 Q_{out,LR} reporting period of Beam Failure Detection Reference Signal, value *pbfd2* corresponds to 2 Q_{out,LR} reporting periods of Beam Failure Detection Reference Signal and so on. |
| ***beamFailureInstanceMaxCount*** |
| This field determines after how many beam failure events the UE triggers beam failure recovery (see TS 38.321 [3], clause 5.17). Value n1 corresponds to 1 beam failure instance, value n2 corresponds to 2 beam failure instances and so on. |
| ***failureDetectionResourcesToAddModList*** |
| A list of reference signals for detecting beam failure and/or cell level radio link failure (RLF). The limits of the reference signals that the network can configure are specified in TS 38.213 [13], table 5-1. The network configures at most two detectionResources per BWP for the purpose *beamFailure* or *both.* If no RSs are provided for the purpose of beam failure detection, the UE performs beam monitoring based on the activated *TCI-State* for PDCCH as described in TS 38.213 [13], clause 6. If no RSs are provided in this list for the purpose of RLF detection, the UE performs Cell-RLM based on the activated *TCI-State* of PDCCH as described in TS 38.213 [13], clause 5. The network ensures that the UE has a suitable set of reference signals for performing cell-RLM. |

The following is the content of field descriptions of a radio link monitoring reference signal (*RadioLinkMonitoringRS*) in said configuration:

| ***RadioLinkMonitoringRS* field descriptions** |
|---|
| ***detectionResource*** |
| A reference signal that the UE shall use for radio link monitoring or beam failure detection (depending on the indicated *purpose).* Only periodic 1-port CSI-RS can be configured on SCell for beam failure detection purpose. |
| ***purpose*** |
| Determines whether the UE shall monitor the associated reference signal for the purpose of cell- and/or beam failure detection. For SCell, network only configures the value to beamFailure. **When failureDetectionSet1-r17 or failureDetectionSet2-r17 is present, network onlv/alwavs configures the value to rlf.** |

The following is an explanation of an existence condition newly added for a field:

| **Conditional Presence** | **Explanation** |
|---|---|
| *CFD-set1* | This field is mandatorv present if *failureDetectionSet1-r17* is included, absent otherwise |

The following is the content of the ID (*RadioLinkMonitoringRS-Id*) of the radio link monitoring reference signal (*RadioLinkMonitoringRS*) in said configuration:

| |
|---|
| - *RadioLinkMonitoringRS-Id* |
| The IE *RadioLinkMonitoringRS-Id* is used to identify one *RadioLinkMonitoringRS.* |

The following is the content of the IE of *RadioLinkMonitoringRS-Id*:

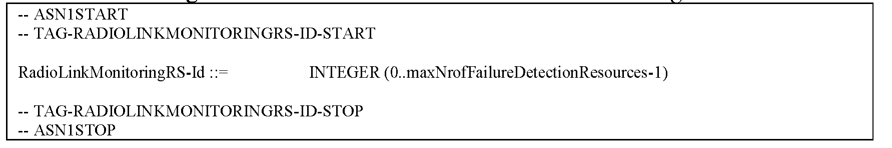

The following is the content of the radio link monitoring reference signal ID (*RadioLinkMonitoringRS-Id-r17*) of the newly added R-17:

| |
|---|
| - *RadioLinkMonitoringRS-Id-r1*7 |
| The IE *RadioLinkMonitoringRS-Id* is used to identify one *RadioLinkMonitorin gRS-r17.* |

The following is the content of the IE of *RadioLinkMonitoringRS-Id-r17*:

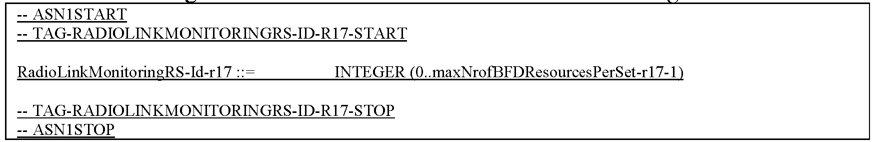

According to the above embodiments, the RRC signaling can support a configuration of an explicit BFD-RS set, i.e., includes two BFD-RS sets, each set has its respective set ID. Thereby, the BFD-RS is configured only through the explicit BFD-RS set, a terminal can directly determine the set where the BFD-RS belong to through the configuration of the RRC signaling, and does not need self-inference, which simplifies the terminal implementation and reduces the cost.

In some further embodiments, the RRC signaling supports the above possibility 1 and the above possibility 2, i.e., the RRC signaling includes one or two BFD-RS sets, each set has its respective set ID. In the standards, regarding the contents of a radio link monitoring configuration and a radio link monitoring reference signal, the description can be supplemented or improved as follows, in which the underlined contents are those of this embodiment which are distinguished from the existing standards, for example bold underlined contents are not included; for another example, bold underlined contents are included as additionally enhanced parts.

The following is the content of the radio link monitoring configuration (*RadioLinkMonitoringConfig*):

| |
|---|
| - *RadioLinkMonitoringConfig* |
| The IE *RadioLinkMonitoringConfig* is used to configure radio link monitoring for detection of beam- and/or cell radio link failure. See also TS 38.321 [3], clause 5.1.1. |

The following is the content of the IE of *RadioLinkMonitoringConfig*:

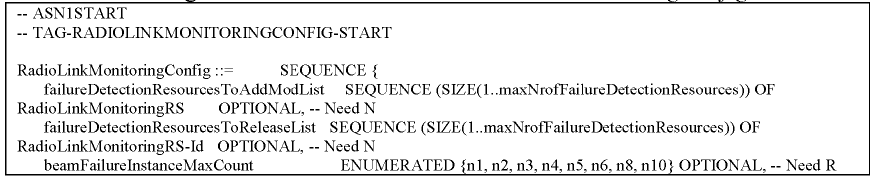

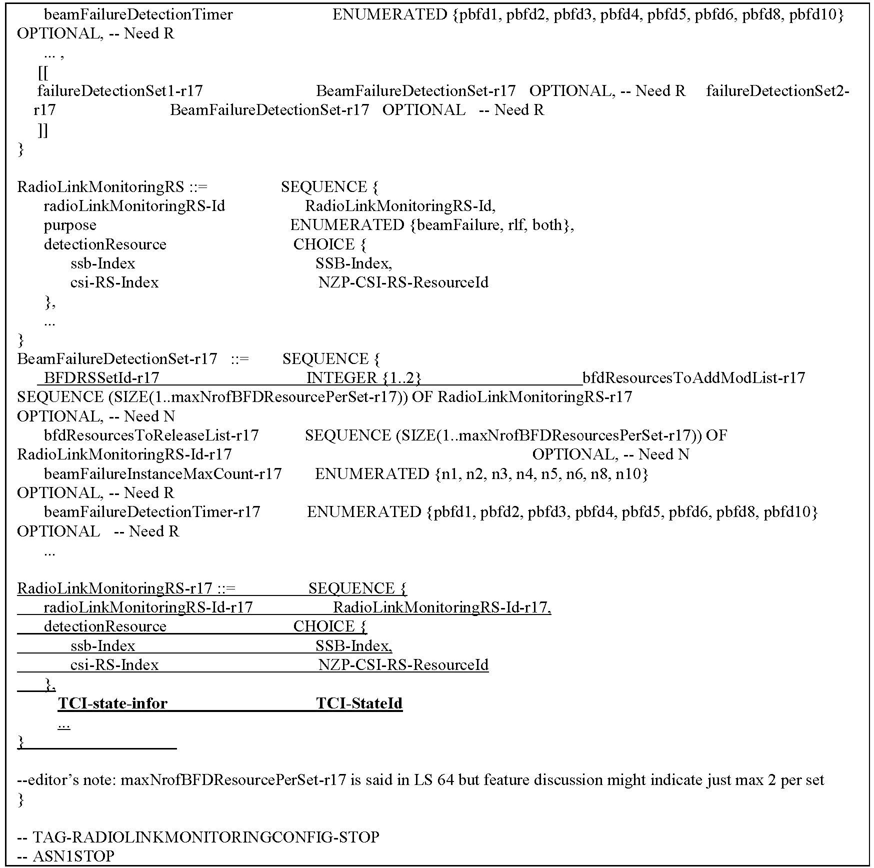

The following is the content of field descriptions of *RadioLinkMonitoringConfig*:

| ***RadioLinkMonitoringConfig* field descriptions** |
|---|
| ***failureDetectionSet1*, *failureDetectionSet2*** |
| Configures parameters for beamfailure detection towards beam failure detection resources configured in the set. If *additionalPCIList* is configured for the serving cell, each RS in one set can be associted only to one PCI. |
| |
| ***beamFailureDetectionTimer*** |
| Timer for beam failure detection (see TS 38.321 [3], clause 5.17). See also the *BeamFailureRecoveryConfig* IE. Value in number of "Q_{out,LR} reporting periods of Beam Failure Detection" Reference Signal (see TS 38.213 [13], clause 6). Value *pbfdl* corresponds to 1 Q_{out,LR} reporting period of Beam Failure Detection Reference Signal, value *pbfd2* corresponds to 2 Q_{out,LR} reporting periods of Beam Failure Detection Reference Signal and so on. |
| ***beamFailureInstanceMaxCount*** |
| This field determines after how many beam failure events the UE triggers beam failure recovery (see TS 38.321 [3], clause 5.17). Value n1 corresponds to 1 beam failure instance, value n2 corresponds to 2 beam failure instances and so on. |
| ***failureDetectionResourcesToAddModList*** |
| A list of reference signals for detecting beam failure and/or cell level radio link failure (RLF). The limits of the reference signals that the network can configure are specified in TS 38.213 [13], table 5-1. The network configures at most two detectionResources per BWP for the purpose *beamFailure* or *both.* If no RSs are provided for the purpose of beam failure detection, the UE performs beam monitoring based on the activated *TCI-State* for PDCCH as described in TS 38.213 [13], clause 6. If no RSs are provided in this list for the purpose of RLF detection, the UE performs Cell-RLM based on the activated *TCI-State* of PDCCH as described in TS 38.213 [13], clause 5. The network ensures that the UE has a suitable set of reference signals for performing cell-RLM. |

The following is the content of field descriptions of a radio link monitoring reference signal (*RadioLinkMonitoringRS*) in said configuration:

| ***RadioLinkMonitoringRS* field descriptions** |
|---|
| ***detectionResource*** |
| A reference signal that the UE shall use for radio link monitoring or beam failure detection (depending on the indicated *purpose*)*.* Only periodic 1-port CSI-RS can be configured on SCell for beam failure detection purpose. |
| ***purpose*** |
| Determines whether the UE shall monitor the associated reference signal for the purpose of cell- and/or beam failure detection. For SCell, network only configures the value to beamFailure. **When failureDetectionSet1-r17 or failureDetectionSet2-r17 is present, network only/always configures the value to rlf.** |

The following is the content of the ID *(RadioLinkMonitoringRS-Id)* of *RadioLinkMonitoringRS* in said configuration:

| |
|---|
| - *RadioLinkMonitoringRS-Id* |
| The IE *RadioLinkMonitoringRS-Id* is used to identify one *RadioLinkMonitoringRS.* |

The following is the content of the IE of *RadioLinkMonitoringRS-Id*:

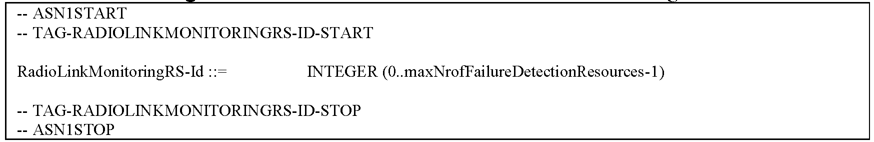

The following is the content of the radio link monitoring reference signal ID (*RadioLinkMonitoringRS-Id-r17*) of the newly added R-17:

| |
|---|
| - *RadioLinkMonitoringRS-Id-r17* |
| The IE *RadioLinkMonitoringRS-Id* is used to identify one *RadioLinkMonitoringRS-r17* |

The following is the content of the IE of *RadioLinkMonitoringRS-Id-r17*:

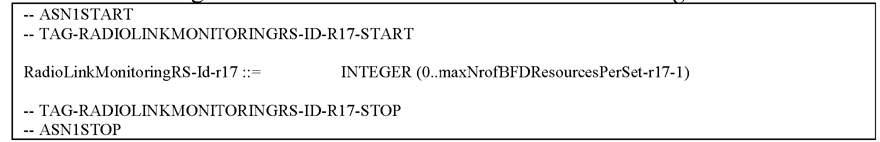

According to the above embodiments, the RRC signaling can support an explicit configuration of a BFD-RS set, for example, may include one or two BFD-RS sets, each set has its respective set ID, etc. Moreover, it can further support a delta configuration of the BFD-RS set. Thereby, it has RRC signaling design flexibility, has forward compatibility, meanwhile can partially simplify the design of a terminal, reducing the cost.

In the embodiments of the present disclosure, after configuring the reference signal for beam failure detection (the first reference signal) by using RRC signaling, the first reference signal may further be configured or updated by using MAC CE signaling.

In the above embodiments, the MAC CE signaling may be a MAC CE used by a network device to indicate a TCI state, the TCI state being a TCI state of a PDCCH reception of a coreset (control resource set) of a serving cell or a set of serving cells, or, the MAC CE signaling is a MAC CE used to configure or update the first reference signal for beam failure detection (called a first MAC CE). Compared with the MAC CE used by the network device to indicate the TCI state, the first MAC CE is a new MAC CE.

In the above embodiments, the first MAC CE may include at least one of the following information:
information on a beam failure detection reference signal set; such as an ID (1 bit) of the beam failure detection reference signal set;
information on a reference signal for beam failure detection in a beam failure detection reference signal set; such as an index of a beam failure detection reference signal (6 bits);
information on a serving cell; and
information on a serving cell list.

Optionally, the first MAC CE may further include one or more QCL assumptions of the first reference signal for beam failure detection, such as an SSB index or NZP CSI-RS resource ID, etc.

In the above embodiments, the information on the serving cell, for example, includes an index of the serving cell or a bitmap of the serving cell. The serving cell here may be: a serving cell configured for a terminal equipment, and/or a serving cell configured with two beam failure detection reference signal sets, and/or a serving cell in the same common update cell list, etc.

In the above embodiments, the serving cell list information e.g. is: information on the common update cell list, or information on a list of cells which share a TCI state. The common update cell list is a list of serving cells which may update a TCI relation simultaneously using one MAC CE, such as *simultaneousTCI-UpdateList1-r16*, *simultaneousTCI-UpdateList1-r16*, *simultaneousU-TCI-UpdateList1-r17*, *simultaneousU-TCI-UpdateList2-r17*, *simultaneousU-TCI-UpdateList3-r17*, *simultaneousU-TCI-UpdateList4-r17.* The information on the common update cell list may be information indicating names of these lists, for example the information on list 1 is 1, the information on list 2 is 2, or be information indicating order of appearance of lists, for example the information on a list that appears firstly is 1, the information on a list that appears secondly is 2, etc. The list of cells which share a TCI state refers to a list of serving cells using the same TCI state configuration.

In the above embodiments, a length of the first MAC CE is variable, its MAC subheader may include an L field for indicating the length of the first MAC CE and an F field for indicating the L field.

In the above embodiments, the MAC subheader of the first MAC CE may include LCID and eLCID. The LCID is 34, i.e., an extended logical channel ID field (one-byte eLCID field); the eLCID uses one of reserved LCID values of one-byte eLCID of UL-SCH, such as 239, 239 or others.

In the aforementioned embodiments, when RRC signaling is used to configure the reference signal for beam failure detection (the first reference signal), the reference signal for beam failure detection (the first reference signal) is associated with information on TCI state of a PDCCH reception; or, if the RRC signaling associates a reference signal for beam failure detection (the first reference signal) for a TCI state of each PDCCH reception, the MAC CE signaling may be a MAC CE used by a network device to indicate the TCI state. On the other hand, when RRC signaling is used to configure the reference signal for beam failure detection (the first reference signal), the reference signal for beam failure detection (the first reference signal) is not associated with information on TCI state of a PDCCH reception; or, if a TCI state of a PDCCH reception is not associated with a reference signal for beam failure detection (the first reference signal), the MAC CE signaling may be the above mentioned first MAC CE.

Implementations of the MAC CE signaling of the embodiments of the present disclosure are described below through specific examples.

In some embodiments, a format of the first MAC CE has the following two types:
Format 1: QCL assumptions with no BFD-RS included;
Format 2: QCL assumptions with a BFD-RS are included.

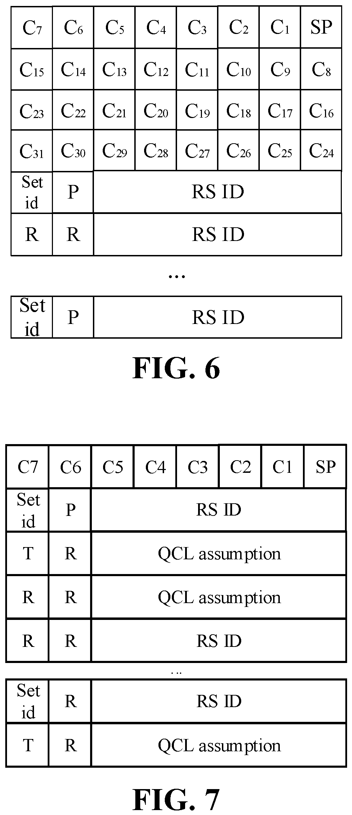

FIG. 5 is a schematic diagram of an example of Format 1 of a first MAC CE, showing a situation of containing a Ci field with one-byte; FIG. 6 is a schematic diagram of another example of Format 1 of the first MAC CE, showing a situation of containing a Ci field with four-byte.

As shown in FIGS. 5 and 6, Format 1 of the first MAC CE at least includes the following fields:
Ci field: indicating whether BFD-RS information of a serving cell whose serving cell index being i is included; Ci=0, representing that BFD-RS information of a serving cell whose serving cell index being i is not included;
Set id field: indicating a BFD-RS set or a coresetpool to which the BFD-RS information included in this byte belongs or corresponds;
P field: indicating whether a next byte is BFD-RS information with same set and same serving cell as the BFD-RS information of current byte, for example P=0 indicates that a next byte is not BFD-RS information with same set and same serving cell as the BFD-RS information of current byte (in such case, the next byte uses a byte including a set id+P field), and P=1 indicate that a next byte is BFD-RS information with same set and same serving cell as the BFD-RS information of current byte (in such case, the next byte uses an R+R byte);
RS ID field: indicating a BFD-RS index, 6 bits;
R field: a reserved field.

In the above embodiments, optionally, the Format 1 of the first MAC CE may further include the following field (not shown in FIG. 5 and FIG. 6):
Ni field: indicating the number of BFD-RS sets of a serving cell whose serving cell index is i/a serving cell with a value being 1 in the i-th Ci field.

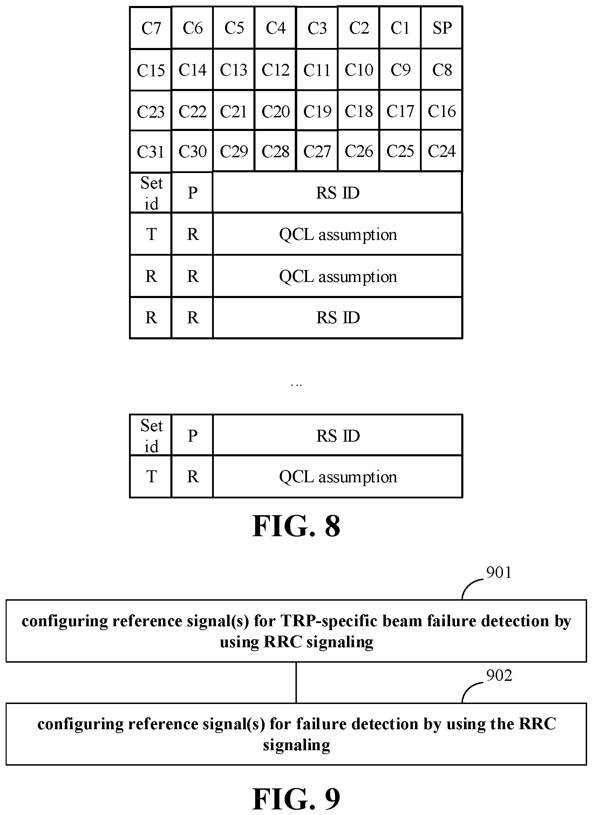

FIG. 7 is a schematic diagram of an example of Format 2 of a first MAC CE, showing a situation of containing a Ci field with one-byte. FIG. 8 is a schematic diagram of another example of Format 2 of a first MAC CE, showing a situation of containing a Ci field with four-byte.

As shown in FIGS. 7 and 8, compared with the Format 1 of the first MAC CE, the Format 2 of the first MAC CE at least further includes the following fields:
QCL assumption field: indicating QCL assumptions of a BFD-RS included in a previous byte;
T field: indicating whether a next byte is another QCL assumption information of a BFD-RS corresponding to the QCL assumption of current byte, for example T=0 indicates that a next byte is not another QCL assumption information of a BFD-RS corresponding to the QCL assumption of current byte (in such case, the next byte includes additional BFD-RS information), T=1 indicates that a next byte is another QCL assumption information of a BFD-RS corresponding to the QCL assumption of current byte (in such case, the next byte uses an R+R byte).

In the above embodiments, optionally, the Format 2 of the first MAC CE may further include the following field (not shown in FIG. 7 and FIG. 8):
Ni field: indicating the number of BFD-RS sets of a serving cell whose serving cell index is i/a serving cell with a value being 1 in the i-th Ci field.

Each of the above embodiments is only illustrative for configuring or updating a first reference signal for beam failure detection by using MAC signaling, but the present disclosure is not limited to this, appropriate modifications can be also made based on the above each embodiment. For example, each of the above embodiments may be used individually, or one or more of the above embodiments may be combined.

The methods in each of the above mentioned embodiments may be implemented by a network device, for example, the network device perform said configuration by transmitting the RRC signaling and the MAC signaling, or it may be implemented by a terminal equipment, for example, the terminal equipment completes said configuration by receiving the RRC signaling and the MAC signaling.

In the embodiments of the present disclosure, optionally, a MAC entity of the terminal equipment may further set a counter (*BFI*_*COUNTER*) of a beam failure instance of a beam failure detection reference signal set of a serving cell to be 0 in a case where the MAC CE signaling is associated with the beam failure detection reference signal set of the serving cell.

For example, if the terminal equipment receives a MAC CE signaling, the MAC CE signaling may update or reconfigure any reference signal for beam failure detection in a beam failure detection reference signal set of a serving cell, the MAC entity sets the counter for the beam failure instance of the beam failure detection reference signal set to be 0.

For another example, if a higher layer reconfigures *beamFailureDetectionTimer*, *beamFailureInstanceMaxCount* or any reference signal for beam failure detection in a beam failure detection reference signal set of a serving cell, or if the MAC CE signaling updates or reconfigures any reference signal for beam failure detection in the beam failure detection reference signal set of the serving cell, the MAC entity sets the counter for the beam failure instance of the beam failure detection reference signal set to be 0.

For a further example, if a higher layer reconfigures *beamFailureDetectionTimer* or *beamFailureInstanceMaxCount* of a beam failure detection reference signal set of a serving cell, or any reference signal in the beam failure detection reference signal set of the serving cell is reconfigured or updated, the MAC entity sets the counter for the beam failure instance of the beam failure detection reference signal set to be 0.

In the above embodiments, the serving cell is configured with two beam failure detection reference signal sets (called a first beam failure detection reference signal set and a second beam failure detection reference signal set).

For example, the RRC signaling configures the serving cell with reference signal(s) for TRP-specific beam failure detection, the reference signal(s) are contained in two beam failure detection reference signal sets, each of which has its respective set ID (identifier).

For another example, the RRC signaling configures the serving cell with a reference signal for TRP-specific beam failure detection, the reference signal is contained in one beam failure detection reference signal set which has a set ID, a lower layer determines a beam failure detection reference signal in another beam failure detection reference signal set via a TCI state of a PDCCH reception.

For a further example, the RRC signaling configures the serving cell with reference signal(s) for TRP-specific beam failure detection, the reference signal(s) are contained in one beam failure detection reference signal set which has no set ID, a terminal equipment determines that the reference signal(s) are associated with two coresetpools.

For still a further example, the RRC signaling does not configure the serving cell with a reference signal for TRP-specific beam failure detection, a lower layer determines reference signal(s) for TRP-specific beam failure detection via a TCI state of a PDCCH reception, and determines that the reference signal(s) are associated with two coresetpools.

In the above embodiments, the first beam failure detection reference signal set e.g. is in one of the following situations:
Situation 1: a BFD-RS set whose BFD-RS set ID is 1;
Situation 2: a BFD-RS set whose BFD-RS set ID is 1, if configured; or another BFD-RS set determined by a lower layer via a TCI state of a PDCCH reception (if a BFD-RS set whose BFD-RS set ID is 2 is configured);
Situation 3: a BFD-RS set consisting of all reference signals which are not associated with a coresetpool or are associated with a coresetpool whose index is 0;
Situation 4: a BFD-RS set determined by a lower layer via a TCI state of a PDCCH reception and consisting of reference signals which are not associated with a coresetpool or are associated with a coresetpool whose index is 0.

In the above embodiments, the second beam failure detection reference signal set e.g. is in one of the following situations:
Situation 1: a BFD-RS set whose BFD-RS set ID is 2;
Situation 2: a BFD-RS set whose BFD-RS set ID is 2, if configured; or another BFD-RS set determined by a lower layer via a TCI state of a PDCCH reception (if a BFD-RS set whose BFD-RS set ID is 1 is configured);
Situation 3: a BFD-RS set consisting of (all) reference signals which are associated with a coresetpool whose index is 1;
Situation 4: a BFD-RS set determined by a lower layer via a TCI state of a PDCCH reception and consisting of (all) reference signals which are associated with a coresetpool whose index is 1.

Each of the above embodiments is only illustrative for two beam failure detection reference signal sets configured for a serving cell, but the present disclosure is not limited to this, appropriate modifications can be also made based on the above each embodiment. For example, each of the above embodiments may be used individually, or one or more of the above embodiments may be combined.

FIG. 9 is another schematic diagram of a method for configuring a beam failure detection reference signal in the embodiments of the present disclosure, as shown in FIG. 9, the method includes:
901: configuring reference signal(s) for TRP-specific beam failure detection by using RRC signaling; and
902: configuring reference signal(s) for failure detection by using the RRC signaling.

It should be noted that the above FIG. 9 only schematically describes the embodiments of the present disclosure, but the present disclosure is not limited to this. For example, an execution order of operations can be adjusted appropriately, moreover some other some operations can be increased or operations thereof may be reduced. Persons skilled in the art can make appropriate modifications according to the above contents, not limited to the records in the above FIG. 9.

In the above embodiments, RRC signaling is used to configure reference signal(s) for TRP-specific beam failure detection, and RRC signaling is used to configure a reference signal for failure detection. Compared with a prior art, a TRP-specific beam failure detection reference signal may be configured only for a cell that is not configured with a cell-specific beam failure detection reference signal, on the one hand, wrong configuration and unnecessary triggering of failure detection or failure recovery as well as the resulted service interruption are avoided; on the other hand, the signaling overhead is reduced, thereby the air interface resources are saved.

In the above embodiments, the RRC signaling may include an indication field (called a first indication field), the first indication field being used to indicate a purpose of the reference signal for failure detection (the third reference signal), so as to indicate a terminal equipment that a purpose to monitor a relevant reference signal is cell detection or beam failure detection.

In the above embodiments, since the RRC signaling configures the reference signal(s) for TRP-specific beam failure detection, thus a value of the first indication field is configured as being of a rlf (radio link failure), for example the value of the first indication field is always configured as being of a rlf, or the value of the first indication field is only configured as being of a rlf.

Relevant contents about the RRC signaling have been described in the preceding text, and are not repeated here.

According to the method in the embodiments of the present disclosure, service interruption is avoided, and network performance is improved.

### Embodiments of a second aspect

The embodiments of the present disclosure provide an apparatus for configuring a beam failure detection reference signal. The apparatus may, for example, be a terminal equipment, or may be one or more parts or components configured in the terminal equipment. Or, the apparatus may, for example, be a network device, or may be one or more parts or components configured in the network device. The apparatus in the embodiments of the present disclosure corresponds to the method in the embodiments of the first aspect, the contents same as those in the embodiments of the first aspect are not repeated.

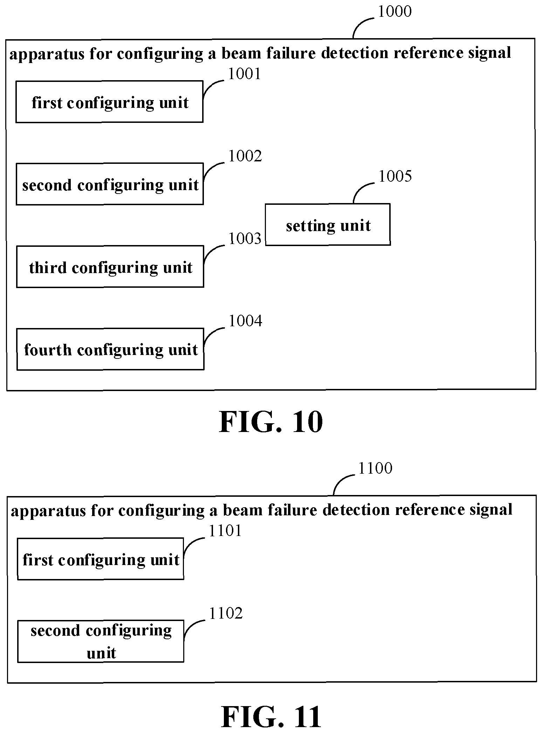

FIG. 10 is a schematic diagram of an example of an apparatus for configuring a beam failure detection reference signal in the embodiments of the present disclosure. As shown in FIG. 10, the apparatus 1000 for configuring a beam failure detection reference signal includes:
a first configuring unit 1001 configured to configure a first reference signal for beam failure detection by using RRC signaling; and
a second configuring unit 1002 configured to configure or update the first reference signal by using MAC CE signaling.

In some embodiments, the first reference signal includes a second reference signal for TRP-specific beam failure detection.

In some embodiments, the second reference signal is contained in two beam failure detection reference signal sets which have their respective set IDs.

In the above embodiments, configuring a first reference signal for beam failure detection by using RRC signaling includes:
the RRC signaling includes a first beam failure detection reference signal set and a second beam failure detection reference signal set, wherein when the first beam failure detection reference signal set exists, the second beam failure detection reference signal set compulsorily exists;
the first beam failure detection reference signal set and the second beam failure detection reference signal set respectively include a set ID, the set ID compulsorily existing, and a value of the set ID being 1 or 2;
the first beam failure detection reference signal set and the second beam failure detection reference signal set respectively include a set of second reference signals, the second reference signals including second reference signal IDs and detection resources; and
the first beam failure detection reference signal set and the second beam failure detection reference signal set respectively include a set of released second reference signal IDs.

In some other embodiments, the second reference signal is contained in one beam failure detection reference signal set which has a set ID.

In the above embodiments, configuring a first reference signal for beam failure detection by using RRC signaling includes:
the RRC signaling includes a third beam failure detection reference signal set, the third beam failure detection reference signal set including a set ID, the set ID compulsorily existing, and a value of the set ID being 1 or 2;
the third beam failure detection reference signal set includes a set of second reference signals, the second reference signals including second reference signal IDs and detection resources; and
the third beam failure detection reference signal set includes a set of released second reference signal IDs.

In the above embodiments, the set ID is related to a first coresetpool, or the third beam failure detection reference signal set corresponds to the first coresetpool.

In the above embodiments, a second reference signals in another beam failure detection reference signal set different from the third beam failure detection reference signal set is determined via a TCI state received by a lower layer in a PDCCH.

In some further embodiments, the second reference signal is contained in one beam failure detection reference signal set which does not have a set ID.

In the above embodiments, configuring a first reference signal for beam failure detection by using RRC signaling includes:
the RRC signaling includes a fourth beam failure detection reference signal set,
the fourth beam failure detection reference signal set includes a set of second reference signals, the second reference signals including second reference signal IDs, coresetpool information associated with the second reference signals, and detection resources; and
the fourth beam failure detection reference signal set includes a set of released second reference signal IDs.

In the above each embodiment, the second reference signal ID is an integer from 0 to 2n-1, n is the maximum number of failure detection resources in each of the aforementioned beam failure detection reference signal sets.

In some embodiments, as shown in FIG. 10, the apparatus 1000 for configuring a beam failure detection reference signal further includes:
a third configuring unit 1003 configured to configure a third reference signal for failure detection by using RRC signaling.

In the above embodiments, the RRC signaling includes a first indication field which is used to indicate a purpose of the third reference signal, wherein if the RRC signaling configures the reference signal(s) for TRP-specific beam failure detection, a value of the first indication field is configured as being of a rlf (radio link failure), for example the value of the first indication field is always configured as being of a rlf, or the value of the first indication field is only configured as being of a rlf.

In some embodiments, as shown in FIG. 10, the apparatus 1000 for configuring a beam failure detection reference signal further includes:
a fourth configuring unit 1004 configured to configure/indicate/associate information on a TCI state of a PDCCH reception for the first reference signal or the second reference signal by using the RRC signaling.

In the above embodiments, the TCI state of the PDCCH reception may be configured via the RRC signaling.

In the above embodiments, the information on the TCI state includes a TCI state ID. Moreover, the information on the TCI state may further include cell information and/or BWP information.

In some embodiments, the first reference signal does not include a second reference signal for TRP-specific beam failure detection, and a lower layer determines the second reference signal via a TCI state of a PDCCH reception, and determines that the second reference signal is associated with one coresetpool. Or, in a case where the first reference signal does not include a second reference signal for TRP-specific beam failure detection, a lower layer determines the second reference signal via a TCI state of a PDCCH reception, and determines that the second reference signal is associated with one coresetpool.

In some embodiments, the MAC CE signaling may be a MAC CE used by a network device to indicate a TCI state, the TCI state being a TCI state of a PDCCH reception of a coreset of a serving cell or a set of serving cells; or, the MAC CE signaling may be a first MAC CE used to configure or update the first reference signal.

In the above embodiments, the first MAC CE may include at least one of the following information:
information on a beam failure detection reference signal set;
information on a reference signal for beam failure detection in a beam failure detection reference signal set;
information on a serving cell; and
information on a serving cell list.

In the above embodiments, the first MAC CE may further include:
one or more QCL assumptions of the first reference signal for beam failure detection.

In the above embodiments, the information on the serving cell may include an index of the serving cell or a bitmap of the serving cell. The serving cell e.g. is:
a serving cell configured for a terminal equipment; or
a serving cell configured with two beam failure detection reference signal sets; or
a serving cell in the same common update cell list.

In the above embodiments, a length of the first MAC CE is variable, a MAC subheader of the first MAC CE includes an L field for indicating the length of the first MAC CE and an F field for indicating the L field.

In the above embodiments, the MAC subheader of the first MAC CE may include LCID and eLCID.

In some embodiments, the apparatus 1000 for configuring a beam failure detection reference signal is configured in a terminal equipment, and as shown in FIG. 10, the apparatus 1000 for configuring a beam failure detection reference signal may further include:
a setting unit 1005 configured to enable a MAC entity of a terminal equipment to set a counter for a beam failure instance of a beam failure detection reference signal set of a serving cell to be 0 in a case where the MAC CE signaling is associated with the beam failure detection reference signal set of the serving cell.

For example, if the MAC CE signaling can update or reconfigure any reference signal for beam failure detection in a beam failure detection reference signal set of a serving cell, the setting unit 1005 enables the MAC entity to set the counter for the beam failure instance of the beam failure detection reference signal set to be 0.

For another example, if a higher layer reconfigures *beamFailureDetectionTimer, beamFailureInstanceMaxCount* or any reference signal for beam failure detection in a beam failure detection reference signal set of a serving cell, or the MAC CE signaling updates or reconfigures any reference signal for beam failure detection in the beam failure detection reference signal set of the serving cell, the setting unit 1005 enables the MAC entity to set the counter for the beam failure instance of the beam failure detection reference signal set to be 0.

For a further example, if a higher layer reconfigures *beamFailureDetectionTimer* or *beamFailureInstanceMaxCount* of a beam failure detection reference signal set of a serving cell, or any reference signal in the beam failure detection reference signal set of the serving cell is reconfigured or updated, the setting unit 1005 enables the MAC entity to set the counter for the beam failure instance of the beam failure detection reference signal set to be 0.

In the above embodiments, the serving cell is configured with two beam failure detection reference signal sets.

For example, the RRC signaling configures reference signal(s) for TRP-specific beam failure detection, the reference signal(s) are contained in two beam failure detection reference signal sets, each of which has its respective set ID.

For another example, the RRC signaling configures a reference signal for TRP-specific beam failure detection, the reference signal is contained in one beam failure detection reference signal set which has a set ID, a lower layer determines a beam failure detection reference signal in another beam failure detection reference signal set via a TCI state of a PDCCH reception.

For a further example, the RRC signaling configures reference signal(s) for TRP-specific beam failure detection, the reference signal(s) are contained in one beam failure detection reference signal set which has no set ID, a terminal equipment determines that the reference signal(s) are associated with two coresetpools.

For a further example, the RRC signaling does not configure a reference signal for TRP-specific beam failure detection, a lower layer determines reference signal(s) for TRP-specific beam failure detection via a TCI state of a PDCCH reception, and determines that the reference signal(s) are associated with two coresetpools.

FIG. 11 is a schematic diagram of another example of an apparatus for configuring a beam failure detection reference signal in the embodiments of the present disclosure. As shown in FIG. 11, the apparatus 1100 for configuring a beam failure detection reference signal includes:
a first configuring unit 1101 configured to configure reference signal(s) for TRP-specific beam failure detection by using RRC signaling; and
a second configuring unit 1102 configured to configure reference signal(s) for failure detection by using the RRC signaling.

In some embodiments, the RRC signaling includes a first indication field which is used to indicate a purpose of a reference signal for failure detection, wherein if the first configuring unit 1101 configures the reference signal(s) for TRP-specific beam failure detection by using the RRC signaling, a value of the first indication field is configured as being of a rlf (radio link failure), for example the value of the first indication field is always configured as being of a rlf, or the value of the first indication field is only configured as being of a rlf.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The apparatuses 1000 to 1100 for configuring a beam failure detection reference signal may further include other components or modules. For detailed contents of these components or modules, relevant technologies can be referred to. Moreover, the above components or modules can be realized by a hardware facility such as a processor, a memory, a transmitter, a receiver, etc. The embodiments of the present disclosure have no limitation to this.

According to the apparatus in the embodiments of the present disclosure, service interruption is avoided, and network performance is improved.

### Embodiments of a third aspect

The embodiments of the present disclosure further provide a communication system, including a network device and a terminal equipment.

In some embodiments, the terminal equipment and/or the network device include (s) the apparatus described in the embodiments of the second aspect, and is configured to perform the method described in the embodiments of the first aspect. Since the method has been described in details in the embodiments of the first aspect, its contents are incorporated here and are not repeated.

The embodiments of the present disclosure further provide a terminal equipment, the terminal equipment for example may be a UE, but the present disclosure is not limited to this, it may also be other terminal equipment.

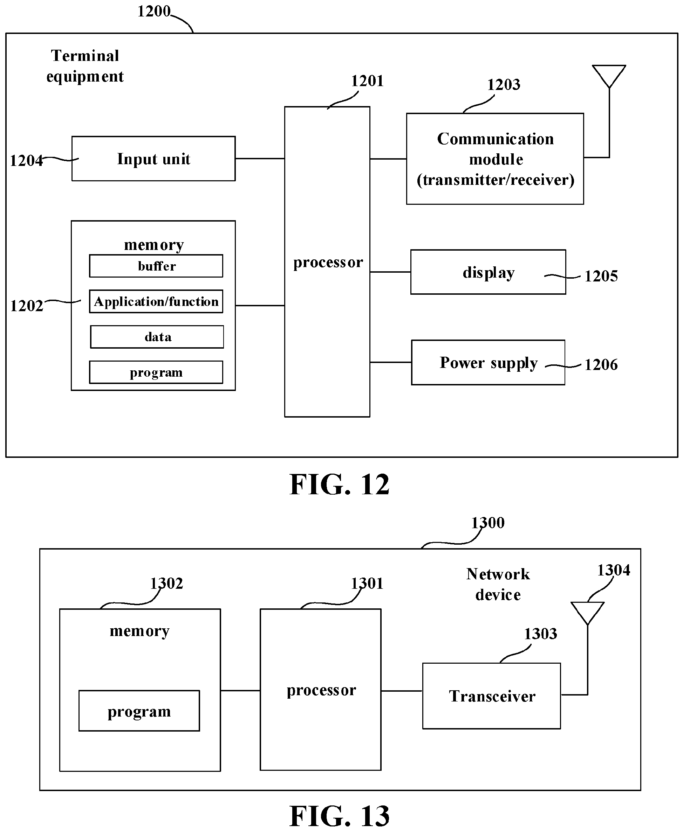

FIG. 12 is a schematic diagram of a terminal equipment in the embodiments of the present disclosure. As shown in FIG. 12, the terminal equipment 1200 may include a processor 1201 and a memory 1202; the memory 1202 stores data and programs, and is coupled to the processor 1201. It's worth noting that this figure is exemplary; other types of structures can also be used to supplement or replace this structure, so as to realize a telecommunication function or other functions.

In some embodiments, functions of the apparatus in the embodiments of the second aspect may be integrated into the processor 1201, wherein the processor 1201 may be configured to execute a program to implement the method as described in the embodiments of the first aspect, the contents of which are incorporated herein and are not described repeatedly here.

In some other embodiments, the apparatus in the embodiments of the second aspect may be configured separately from the processor 1201, for example the apparatus in the embodiments of the second aspect may be configured as a chip connected to the processor 1201, functions of the apparatus in the embodiments of the second aspect are realized under control of the processor 1201.

As shown in FIG. 12, the terminal equipment 1200 may further include: a communication module 1203, an input unit 1204, a display 1205 and a power supply 1206. The functions of said components are similar to prior arts, which are not repeated here. It's worth noting that the terminal equipment 1200 does not have to include all the components shown in FIG. 12, said components are not indispensable. Moreover, the terminal equipment 1200 may also include components not shown in FIG. 12, relevant technologies can be referred to.

The embodiments of the present disclosure further provide a network device, the network device for example may be a base station, but the present disclosure is not limited to this, it may also be other network device.

FIG. 13 is a schematic diagram of composition of a network device in the embodiments of the present disclosure. As shown in FIG. 13, the network device 1300 may include: a processor 1301 and a memory 1302; the memory 1302 is coupled to the processor 1301. The memory 1302 may store various data; moreover, also stores a program for information processing, and executes the program under control of the processor 1301.

In some embodiments, functions of the apparatus in the embodiments of the second aspect may be integrated into the processor 1301, wherein the processor 1301 may be configured to execute a program to implement the method as described in the embodiments of the first aspect, the contents of which are incorporated herein and are not described repeatedly here.

In some other embodiments, the apparatus in the embodiments of the second aspect may be configured separately from the processor 1301, for example the apparatus in the embodiments of the second aspect may be configured as a chip connected to the processor 1301, functions of the apparatus in the embodiments of the second aspect are realized under control of the processor 1301.

In addition, as shown in FIG. 13, the network device 1300 may further include: a transceiver 1303 and 1304. The functions of said components are similar to prior arts, which are not repeated here. It's worth noting that the network device 1300 does not have to include all the components shown in FIG. 13. Moreover, the network device 1300 may also include components not shown in FIG. 13, relevant arts can be referred to.

The embodiments of the present disclosure further provide a computer program, wherein when the program is executed in a terminal equipment or a network device, the program enables the terminal equipment or the network device to execute the method described in the embodiments of the first second aspect.

The embodiments of the present disclosure further provide a storage medium in which a computer program is stored, wherein the computer program enables a terminal equipment or a network device to execute the method described in the embodiments of the first aspect.

The apparatus and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

As for the implementations including the above embodiments, the following supplements are further disclosed:
1. A method for configuring a beam failure detection reference signal, wherein the method includes:
   configuring a first reference signal for beam failure detection by using RRC signaling; and
   configuring or updating the first reference signal by using MAC CE signaling.
2. The method according to Supplement 1, wherein
   the first reference signal includes a second reference signal for TRP-specific beam failure detection.
3. The method according to Supplement 2, wherein
   the second reference signal is contained in two beam failure detection reference signal sets which have their respective set IDs.
4. The method according to Supplement 2 or 3, wherein configuring a first reference signal for beam failure detection by using the RRC signaling includes:
   the RRC signaling includes a first beam failure detection reference signal set and a second beam failure detection reference signal set, wherein when the first beam failure detection reference signal set exists, the second beam failure detection reference signal set compulsorily exists;
   the first beam failure detection reference signal set and the second beam failure detection reference signal set respectively include a set ID, the set ID compulsorily existing, and a value of the set ID being 1 or 2;
   the first beam failure detection reference signal set and the second beam failure detection reference signal set respectively include a set of second reference signals, the second reference signals including second reference signal IDs and detection resources; and
   the first beam failure detection reference signal set and the second beam failure detection reference signal set respectively include a set of released second reference signal IDs.
5. The method according to Supplement 2, wherein
   the second reference signal is contained in one beam failure detection reference signal set which has a set ID.
6. The method according to Supplement 2 or 5, wherein configuring a first reference signal for beam failure detection by using the RRC signaling includes:
   the RRC signaling includes a third beam failure detection reference signal set, the third beam failure detection reference signal set including a set ID, the set ID compulsorily existing, and a value of the set ID being 1 or 2;
   the third beam failure detection reference signal set includes a set of second reference signals, the second reference signals including second reference signal IDs and detection resources; and
   the third beam failure detection reference signal set includes a set of released second reference signal IDs.
7. The method according to Supplement 6, wherein
   the set ID is related to a first coresetpool, or the third beam failure detection reference signal set corresponds to the first coresetpool.
8. The method according to Supplement 6, wherein
   the second reference signals in another beam failure detection reference signal set different from the third beam failure detection reference signal set is determined by a lower layer via a TCI state of a PDCCH reception.
9. The method according to Supplement 2, wherein
   the second reference signal is contained in one beam failure detection reference signal set which does not have a set ID.
10. The method according to Supplement 2 or 9, wherein configuring a first reference signal for beam failure detection by using the RRC signaling includes:
   the RRC signaling includes a fourth beam failure detection reference signal set,
   the fourth beam failure detection reference signal set includes a set of second reference signals, the second reference signals including second reference signal IDs, coresetpool information associated with the second reference signals, and detection resources; and
   the fourth beam failure detection reference signal set includes a set of released second reference signal IDs.
11. The method according to Supplement 4 or 6 or 10, wherein
   the second reference signal ID is an integer from 0 to n-1, n is the maximum number of failure detection resources in the beam failure detection reference signal sets.
12. The method according to any one of Supplements 1 to 11, wherein the method further includes:
   configuring a third reference signal for failure detection by using the RRC signaling.
13. The method according to Supplement 12, wherein
   the RRC signaling includes a first indication field which is used to indicate a purpose of the third reference signal,
   wherein if the RRC signaling configures the reference signal(s) for TRP-specific beam failure detection, a value of the first indication field is configured as being of a rlf (radio link failure).
14. The method according to any one of Supplements 2 to 13, wherein the method further includes:
   configuring/indicating/associating information on a TCI state of a PDCCH reception for the first reference signal or the second reference signal by using the RRC signaling.
15. The method according to Supplement 14, wherein
   the TCI state of the PDCCH reception is configured via the RRC signaling.
16. The method according to Supplement 14 or 15, wherein
   the information on the TCI state includes a TCI state ID.
17. The method according to Supplement 16, wherein
   the information on the TCI state includes cell information and/or BWP information.
18. The method according to Supplement 1, wherein
   the first reference signal does not include a second reference signal for TRP-specific beam failure detection, a lower layer determines the second reference signal via a TCI state of a PDCCH reception, and determines that the second reference signal is associated with a coresetpool.
19. The method according to any one of Supplements 1 to 18, wherein the MAC CE signaling is:
   a MAC CE used by a network device to indicate a TCI state, the TCI state being a TCI state of a PDCCH reception of a coreset of a serving cell or a set of serving cells; or,
   a first MAC CE used to configure or update the first reference signal.
20. The method according to Supplement 19, wherein the first MAC CE includes at least one of the following information:
   information on a beam failure detection reference signal set;
   information on a reference signal for beam failure detection in a beam failure detection reference signal set;
   information on a serving cell; and
   information on a serving cell list.
21. The method according to Supplement 20, wherein the first MAC CE further includes:
   one or more QCL assumptions of the first reference signal for beam failure detection.
22. The method according to Supplement 20 or 21, wherein
   the information on the serving cell includes an index of the serving cell or a bitmap of the serving cell.
23. The method according to any one of Supplements 19-22, wherein the serving cell is at least one of the following:
   a serving cell configured for a terminal equipment;
   a serving cell configured with two beam failure detection reference signal sets;
   a serving cell in the same common update cell list.
24. The method according to any one of Supplements 19-23, wherein a length of the first MAC CE is variable, a MAC subheader of the first MAC CE includes an L field for indicating the length of the first MAC CE and an F field for indicating the L field.
25. The method according to Supplement 24, wherein
   the MAC subheader of the first MAC CE includes LCID and eLCID.
26. The method according to any one of Supplements 1-25, wherein the method includes:
   a MAC entity of a terminal equipment sets a counter for a beam failure instance of a beam failure detection reference signal set of a serving cell to be 0 in a case where the MAC CE signaling is associated with the beam failure detection reference signal set of the serving cell.
27. The method according to Supplement 26, wherein
   if the MAC CE signaling can update or reconfigure any reference signal for beam failure detection in a beam failure detection reference signal set of a serving cell, the MAC entity sets the counter for the beam failure instance of the beam failure detection reference signal set to be 0.
28. The method according to Supplement 26, wherein
   if a higher layer reconfigures *beamFailureDetectionTimer, beamFailureInstanceMaxCount* or any reference signal for beam failure detection in a beam failure detection reference signal set of a serving cell, or the MAC CE signaling updates or reconfigures any reference signal for beam failure detection in the beam failure detection reference signal set of the serving cell, the MAC entity sets the counter for the beam failure instance of the beam failure detection reference signal set to be 0.
29. The method according to Supplement 26, wherein
   if a higher layer reconfigures *beamFailureDetectionTimer* or *beamFailureInstanceMaxCount* of a beam failure detection reference signal set of a serving cell, or any reference signal in the beam failure detection reference signal set of the serving cell is reconfigured or updated, the MAC entity sets the counter for the beam failure instance of the beam failure detection reference signal set to be 0.
30. The method according to any one of Supplements 26-29, wherein
   the serving cell is configured with two beam failure detection reference signal sets.
31. The method according to Supplement 23 or 30, wherein that the serving cell is configured with two beam failure detection reference signal sets refers to at least one of the following situations:
   the RRC signaling configures reference signal(s) for TRP-specific beam failure detection, the reference signal(s) are contained in two beam failure detection reference signal sets, each of which has its respective set ID;
   the RRC signaling configures a reference signal for TRP-specific beam failure detection, the reference signal is contained in one beam failure detection reference signal set which has a set ID, a lower layer determines a beam failure detection reference signal in another beam failure detection reference signal set via a TCI state of a PDCCH reception;
   the RRC signaling configures reference signal(s) for TRP-specific beam failure detection, the reference signal(s) are contained in one beam failure detection reference signal set which has no set ID, a terminal equipment determines that the reference signal(s) are associated with two coresetpools.
   the RRC signaling does not configure a reference signal for TRP-specific beam failure detection, a lower layer determines reference signal(s) for TRP-specific beam failure detection via a TCI state of a PDCCH reception, and determines that the reference signal(s) are associated with two coresetpools.
32. A method for configuring a beam failure detection reference signal, wherein the method includes:
   configuring reference signal(s) for TRP-specific beam failure detection by using RRC signaling; and
   configuring reference signal(s) for failure detection by using the RRC signaling.
33. The method according to Supplement 32, wherein
   the RRC signaling includes a first indication field, the first indication field being used for indicating a purpose of the reference signal for failure detection,
   wherein if the RRC signaling configures reference signal(s) for TRP-specific beam failure detection, a value of the first indication field is configured as being of a rlf (radio link failure).
34. A terminal equipment, including a memory and a processor, the memory storing a computer program, and the processor being configured to execute the computer program to implement the method according to any one of Supplements 1 to 33.
35. A network device, including a memory and a processor, the memory storing a computer program, and the processor being configured to execute the computer program to implement the method according to any one of Supplements 1 to 25 and 31 to 33.
36. A communication system, including the network device according to Supplement 35 and the terminal equipment according to Supplement 34.

## Claims

1. An apparatus for configuring a beam failure detection reference signal, the apparatus comprising:
a memory that stores a plurality of instructions; and
a processor circuitry coupled to the memory and configured to execute the instructions to:
configure a first reference signal for beam failure detection by using radio resource control signaling; and
configure or update the first reference signal by using media access control control element signaling.

2. The apparatus according to claim 1, wherein the first reference signal is a second reference signal for transmission reception point-specific beam failure detection.

3. The apparatus according to claim 2, wherein
the radio resource control signaling includes a first beam failure detection reference signal set and a second beam failure detection reference signal set, wherein when the first beam failure detection reference signal set exists, the second beam failure detection reference signal set compulsorily exists;
the first beam failure detection reference signal set and the second beam failure detection reference signal set respectively include a group identifier, the group identifier compulsorily existing, and a value of the group identifier being 1 or 2;
the first beam failure detection reference signal set and the second beam failure detection reference signal set respectively include a group of the second reference signals, the second reference signal including second reference signal identifier and detection resource; and
the first beam failure detection reference signal set and the second beam failure detection reference signal set respectively include a group of released second reference signal identifiers.

4. The apparatus according to claim 1, wherein the processor circuitry is further configured to:
configure a third reference signal for failure detection by using the radio resource control signaling.

5. The apparatus according to claim 4, wherein,
the radio resource control signaling includes a first indication field, the first indication field being used for indicating a purpose of the third reference signal,
wherein if the radio resource control signaling configures reference signal(s) for transmission reception point-specific beam failure detection, a value of the first indication field is configured as being of a radio link failure.

6. The apparatus according to claim 2, wherein the processor circuitry is further configured to:
configure or indicate or associate information on a transmission configuration indication state received via a physical downlink control channel for the first reference signal or the second reference signal by using the radio resource control signaling.

7. The apparatus according to claim 6, wherein,
the information on a transmission configuration indication state includes a transmission configuration indication state identifier.

8. The apparatus according to claim 1, wherein the first reference signal does not include a second reference signal for transmission reception point-specific beam failure detection, and a lower layer determines the second reference signal via a transmission configuration indication state received via a physical downlink control channel, and determines that the second reference signal is associated with a control resource set pool.

9. The apparatus according to claim 1, wherein the medium access control control element signaling is:
a first medium access control control element for configuring or updating the first reference signal.

10. The apparatus according to claim 9, wherein the first medium access control control element comprises at least one piece of the following information:
information on a beam failure detection reference signal set;
information on a reference signal of a beam failure detection reference signal set for beam failure detection;
information on a serving cell;
information on a serving cell list; and
a field used to indicate whether the next octet is the same BFD-RS set information as the BFD-RS information of the current octet.

11. The apparatus according to claim 10, wherein, a value of the field being 1 indicates that the next octet is the same set of BFD-RS information as the BFD-RS information of the current octet.

12. The apparatus according to claim 1, wherein the processor circuitry is further configured to:
enable a medium access control entity of a terminal equipment to set a counter of a beam failure instance of a beam failure detection reference signal set of a serving cell to be 0 in a case where the medium access control control element signaling is associated with the beam failure detection reference signal set of the serving cell.

13. The apparatus according to claim 12, wherein,
if a higher layer reconfigures *beamFailureDetectionTimer, beamFailureInstanceMaxCount* or any reference signal for beam failure detection of a beam failure detection reference signal set of a serving cell, or the medium access control control element signaling updates or reconfigures any reference signal for beam failure detection in the beam failure detection reference signal set of the serving cell, the processor circuitry enables the MAC entity to set the counter of the beam failure instance of the beam failure detection reference signal set to be 0.

14. The apparatus according to claim 12, wherein,
if a higher layer reconfigures *beamFailureDetectionTimer* or *beamFailureInstanceMaxCount* of a beam failure detection reference signal set of a serving cell, or any reference signal of the beam failure detection reference signal set of the serving cell is reconfigured or updated, the processor circuitry enables the MAC entity to set the counter of the beam failure instance of the beam failure detection reference signal set to be 0.

15. A communication system, comprising a network device and a terminal equipment, wherein,
the network device and/or the terminal equipment is/are configured to:
configure a first reference signal for beam failure detection by using radio resource control signaling, and configure or update the first reference signal by using media access control control element signaling; or
configure reference signal(s) for transmission reception point-specific beam failure detection by using radio resource control signaling, and configure reference signal(s) for failure detection by using the radio resource control signaling.
